(19) Europäisches Patentamt / European Patent Office / Office européen des brevets

(11) **EP 4 325 759 A1**

(12) **EUROPEAN PATENT APPLICATION**
published in accordance with Art. 153(4) EPC

(43) Date of publication:
**21.02.2024 Bulletin 2024/08**

(21) Application number: **22787449.2**

(22) Date of filing: **08.04.2022**

(51) International Patent Classification (IPC):
***H04L 5/00*** *(2006.01)* ***H04W 72/04*** *(2023.01)*

(52) Cooperative Patent Classification (CPC):
**H04L 5/00; H04W 72/04**

(86) International application number:
**PCT/CN2022/085804**

(87) International publication number:
**WO 2022/218223 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.04.2021 CN 202110413232**

(71) Applicant: **Datang Mobile Communications Equipment Co., Ltd.**
**Beijing 100085 (CN)**

(72) Inventors:
- **GAO, Xuejuan**
  **Beijing 100085 (CN)**
- **SI, Qianqian**
  **Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **TRANSMISSION PROCESSING METHOD AND APPARATUS IN CARRIER SWITCHING**

(57) A communication processing method and apparatus for carrier switching are disclosed, relating to the field of communications technology. The method includes: in a case that a carrier switching is to be performed on a physical uplink control channel PUCCH communicated on a first carrier, determining a first PUCCH resource on a second carrier after PUCCH carrier switching in a predetermined manner, where the second carrier is a carrier for communicating PUCCH after switching.

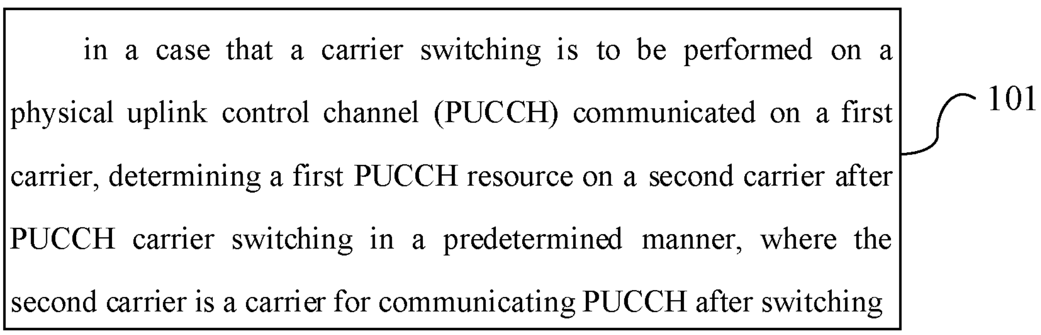


FIG.1

EP 4 325 759 A1

**Description**

## CROSS REFERENCE OF RELATED APPLICATION

The present application claims a priority to Chinese patent application No. 202110413232.X filed on April 16, 2021, which is incorporated hereby by reference in its entirety.

## TECHNICAL FIELD

The present disclosure relates to the field of communications technology, and in particular, to a communication processing method and apparatus for carrier switching.

## BACKGROUND

In the fifth-generation new radio system (5 Generation New RAT, 5G NR), there are a large quantity of ultra-reliable and low latency communication (Ultra-Reliable and Low Latency Communication, URLLC) services, and an important factor of the URLLC service is low-latency. A latency for communicating uplink control information (Uplink Control Information, UCI) of URLLC will affect a latency for communicating the URLLC service. For example, a feedback latency of hybrid automatic repeat request-acknowledgment (Hybrid Automatic Repeat request-ACKnowledgment, HARQ-ACK) will affect a retransmission of a physical downlink shared channel (Physical Downlink Shared Channel, PDSCH), a feedback latency of channel state information (Channel State Information, CSI) will affect the scheduling of the PDSCH, which may in turn affects a latency of a downlink service, a latency of scheduling request (Scheduling Request, SR) will affect a latency of physical uplink shared channel (Physical Uplink Shared Channel, PUSCH), which may in turn affects a latency of a uplink service.

Moreover, a time division multiplexing (Time Division Multiplexing, TDM) communication is performed for uplink and downlink communication, considering that the uplink communication and downlink communication on the unpaired spectrum share the same spectrum resource. Therefore, in a carrier group, the carrier configured to communicate a physical uplink control channel (Physical Uplink Control Channel, PUCCH) may be limited by the uplink to downlink ratio, and an available uplink resource cannot be found at a time domain position which is closet to a position satisfying a processing time of the downlink communication (for example, the position satisfying a processing latency is just the time domain position for the downlink communication). As such, if waiting for an available uplink resource on the carrier on which the PUCCH is communicated, a transmission latency will generate which may affect a performance of the URLLC.

In order to reduce the PUCCH transmission latency, one possible solution is to perform PUCCH carrier switching, that is, the PUCCH is switched from the carrier originally configured for communication to another carrier for the communication. As a result, the PUCCH communication can be avoided to be performed on the original carrier which has insufficient scheduled resources or a resource conflict. However, how to perform PUCCH communication by using the PUCCH carrier switching is not clear.

## SUMMARY

The present disclosure is to provide a communication processing method and apparatus for carrier switching, to ensure a normal implementation of the communication with PUCCH carrier switching.

To achieve this, an embodiment of the present disclosure provides a communication processing method for carrier switching, applied to a network-side device or a terminal, which includes:

in a case that a carrier switching is to be performed on a physical uplink control channel PUCCH communicated on a first carrier, determining a first PUCCH resource on a second carrier after PUCCH carrier switching in a predetermined manner, where the second carrier is a carrier for communicating PUCCH after switching.

Optionally, the determining the first PUCCH resource on the second carrier after the PUCCH carrier switching in the predetermined manner includes:

determining, according to a starting symbol and a symbol length of a second PUCCH resource, a PUCCH resource in a time unit for communicating the PUCCH on the second carrier as the first PUCCH resource, where the second PUCCH resource is a PUCCH resource on the first carrier which corresponds to the PUCCH for which the carrier switching is performed.

Optionally, a frequency domain resource of the first PUCCH resource and a frequency domain resource of the second PUCCH resource are determined according to a same resource block RB index and a same quantity of RBs, and/or, a code domain resource of the first PUCCH resource and a code domain resource of the second PUCCH resource are determined according to a same index.

Optionally, a unit of a time unit for communicating PUCCH on the first carrier is the same as a unit of a time unit for communicating PUCCH on the second carrier; or, the time unit for communicating PUCCH on the first carrier is less than or equal to the time unit for communicating PUCCH on the second carrier.

Optionally, the determining the first PUCCH resource on the second carrier after the PUCCH carrier switching in the predetermined manner includes:

in a case that the PUCCH for which the carrier switching is to be performed has at least a corresponding physical downlink control channel PDCCH, determining, by the terminal according to a PUCCH resource indication field in a last PDCCH corresponding to the PUCCH for which the carrier switching is to be performed, a PUCCH resource from a pre-configured PUCCH resource set on the second carrier as the first PUCCH resource, wherein the pre-configured PUCCH resource set comprises one or more PUCCH resource sets; or

in a case that the PUCCH for which the carrier switching is to be performed has at least a corresponding PDCCH, determining, by the network-side device, a PUCCH resource from a pre-configured PUCCH resource set on the second carrier, determining, by the network-side device, a PUCCH resource indication field in the PDCCH for indicating the determined PUCCH resource, and sending, by the network-side device, the PDCCH to the terminal, wherein the pre-configured PUCCH resource set comprises one or more PUCCH resource sets.

Optionally, the determining the first PUCCH resource on the second carrier after the PUCCH carrier switching in the predetermined manner includes:

in a case that the PUCCH for which the carrier switching is to be performed has no corresponding PDCCH, determining a PUCCH resource from pre-configured PUCCH resources on the second carrier which correspond to semi-persistent uplink control information UCI as the first PUCCH resource.

Optionally, the determining the first PUCCH resource on the second carrier after the PUCCH carrier switching in the predetermined manner includes:

determining a third PUCCH resource on the second carrier as the first PUCCH resource, wherein the third PUCCH resource is a pre-configured PUCCH resource on the second carrier, the third PUCCH resource is a first-type PUCCH resource, and the first-type PUCCH resource comprises at least one of:

a PUCCH resource corresponding to a first type of preset PUCCH format; and

a PUCCH resource with a payload capacity greater than a preset threshold.

Optionally, the method further comprises:

in a case that a quantity of bits of UCI to be communicated on the first PUCCH resource is less than a predetermined threshold, supplementing the UCI with information until the predetermined threshold is reached.

Optionally, the determining the first PUCCH resource on the second carrier after the PUCCH carrier switching in the predetermined manner includes:

determining, according to a quantity of bits of UCI to be communicated on the first PUCCH resource, a PUCCH resource from one or more PUCCH resource sets pre-configured on the second carrier as the first PUCCH resource, where the one or more PUCCH resource sets comprise at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with a payload capacity not exceeding the preset threshold or a resource corresponding to a second type of preset PUCCH format.

Optionally, the determining the PUCCH resource from the one or more PUCCH resource sets pre-configured on the second carrier as the first PUCCH resource includes:

in a case that the one or more PUCCH resource sets comprise only one first-type PUCCH resource and only one second-type PUCCH resource, determining a PUCCH resource corresponding to a quantity of bits of UCI carried on the PUCCH for which the carrier switching is to be performed as the first PUCCH resource; or,

in a case that the one or more PUCCH resource sets comprise a plurality of first-type PUCCH resources and/or a plurality of second-type PUCCH resources, determining, according to the quantity of bits of UCI to be communicated on the first PUCCH resource, one type of PUCCH resources from the first-type PUCCH resources and the second-type PUCCH resources; and in a case that the determined one type of PUCCH resources comprises a plurality of PUCCH resources, determining a fourth PUCCH resource from the determined one type of PUCCH resources as the first PUCCH resource, and

where a starting position of the fourth PUCCH resource is not earlier than a starting position of a second PUCCH resource; or, the fourth PUCCH resource meets a processing time requirement for UCI communication, wherein the second PUCCH resource is a PUCCH resource on the first carrier which corresponds to the PUCCH for which the carrier switching is performed.

Optionally, the determining the fourth PUCCH resource as the first PUCCH resource includes:

in a case that the fourth PUCCH resource comprises a plurality of PUCCH resources, selecting a PUCCH resource from the plurality of PUCCH resources as the first PUCCH resource based on at least one of:
a starting position;
a quantity of occupied symbols;
a payload capacity; and
a resource number.

Optionally, the method further includes:
in a case that the determined first PUCCH resource is the first-type PUCCH resource, determining, according to a quantity of bits of UCI carried by the first PUCCH resource, a quantity of resource blocks RBs actually occupied by the first PUCCH resource

An embodiment of the present disclosure further provides a communication processing apparatus for carrier switching, the communication processing apparatus for carrier switching is a network-side device or a terminal, which includes: a memory, a transceiver, and a processor;

where the memory is configured to store program instructions; the transceiver is configured to send and receive data under the control of the processor; the processor is configured to read the program instructions in the memory and perform following operation:
in a case that a carrier switching is to be performed on a physical uplink control channel PUCCH communicated on a first carrier, determining a first PUCCH resource on a second carrier after PUCCH carrier switching in a predetermined manner, where the second carrier is a carrier for communicating PUCCH after switching.

Optionally, the processor is configured to read the program instructions in the memory to perform following operation:
determining, according to a starting symbol and a symbol length of a second PUCCH resource, a PUCCH resource in a time unit for communicating the PUCCH on the second carrier as the first PUCCH resource, where the second PUCCH resource is a PUCCH resource on the first carrier which corresponds to the PUCCH for which the carrier switching is performed.

Optionally, a frequency domain resource of the first PUCCH resource and a frequency domain resource of the second PUCCH resource are determined according to a same resource block RB index and a same quantity of RBs, and/or, a code domain resource of the first PUCCH resource and a code domain resource of the second PUCCH resource are determined according to a same index.

Optionally, a unit of a time unit for communicating PUCCH on the first carrier is the same as a unit of a time unit for communicating PUCCH on the second carrier; or, the time unit for communicating PUCCH on the first carrier is less than or equal to the time unit for communicating PUCCH on the second carrier.

Optionally, the processor is configured to read the program instructions in the memory to perform following operation:

in a case that the PUCCH for which the carrier switching is to be performed has at least a corresponding physical downlink control channel PDCCH, determining, according to a PUCCH resource indication field in a last PDCCH corresponding to the PUCCH for which the carrier switching is to be performed, a PUCCH resource from a pre-configured PUCCH resource set on the second carrier as the first PUCCH resource; where the pre-configured PUCCH resource set includes one or more PUCCH resource sets; or
in a case that the PUCCH for which the carrier switching is to be performed has at least a corresponding PDCCH, determining a PUCCH resource from a pre-configured PUCCH resource set on the second carrier, determining a PUCCH resource indication field in the PDCCH for indicating the determined PUCCH resource, and sending the PDCCH to the terminal; where the pre-configured PUCCH resource set includes one or more PUCCH resource sets.

Optionally, the processor is configured to read the program instructions in the memory to perform following operation:
in a case that the PUCCH for which the carrier switching is to be performed has no corresponding PDCCH, determining, a PUCCH resource from pre-configured PUCCH resources on the second carrier which correspond to semi-persistent uplink control information UCI as the first PUCCH resource.

Optionally, the processor is configured to read the program instructions in the memory to perform following operation:

determining a third PUCCH resource on the second carrier as the first PUCCH resource, and
wherein the third PUCCH resource is a pre-configured PUCCH resource on the second carrier, the third PUCCH resource is a first-type PUCCH resource, and the first-type PUCCH resource comprises at least one of:
a PUCCH resource corresponding to a first type of preset PUCCH format; and
a PUCCH resource with a payload capacity greater than a preset threshold.

Optionally, the processor is configured to read the program instructions in the memory to perform following operation:
in a case that a quantity of bits of UCI to be communicated on the first PUCCH resource is less than a predetermined threshold, supplementing the UCI with information until the predetermined threshold is reached.

Optionally, the processor is configured to read the program instructions in the memory to perform following operation:

determining, according to a quantity of bits of UCI to be communicated on the first PUCCH resource, a PUCCH resource from one or more PUCCH resource sets pre-configured on the second carrier as the first PUCCH resource, and
wherein the one or more PUCCH resource sets comprise at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with a payload capacity not exceeding the preset threshold or a resource corresponding to a second type of preset PUCCH format.

Optionally, the processor is configured to read the program instructions in the memory to perform following operation:

in a case that the one or more PUCCH resource sets comprise only one first-type PUCCH resource and only one second-type PUCCH resource, determining a PUCCH resource corresponding to a quantity of bits of UCI carried on the PUCCH for which the carrier switching is to be performed as the first PUCCH resource; or
in a case that the one or more PUCCH resource sets comprise a plurality of first-type PUCCH resources and/or a plurality of second-type PUCCH resources, determining, according to the quantity of bits of UCI to be communicated on the first PUCCH resource, one type of PUCCH resources from the first-type PUCCH resources and the second-type PUCCH resources; and in a case that the determined one type of PUCCH resources comprises a plurality of PUCCH resources, determining a fourth PUCCH resource from the determined one type of PUCCH resources as the first PUCCH resource, and
wherein a starting position of the fourth PUCCH resource is not earlier than a starting position of a second PUCCH resource; or, the fourth PUCCH resource meets a processing time requirement for UCI communication, wherein the second PUCCH resource is a PUCCH resource on the first carrier which corresponds to the PUCCH for which the carrier switching is performed.

Optionally, the processor is configured to read the program instructions in the memory to perform following operation:

in a case that the fourth PUCCH resource comprises a plurality of PUCCH resources, selecting a PUCCH resource from the plurality of PUCCH resources as the first PUCCH resource based on at least one of:
a starting position;
a quantity of occupied symbols;
a payload capacity; and
a resource number.

Optionally, the processor is configured to read the program instructions in the memory to perform following operation:
in a case that the determined first PUCCH resource is the first-type PUCCH resource, determining, according to a quantity of bits of UCI carried by the first PUCCH resource, a quantity of resource blocks RBs actually occupied by the first PUCCH resource.

An embodiment of the present disclosure further provides a communication processing apparatus for carrier switching, the communication processing apparatus for carrier switching is a network-side device or a terminal, which includes:
a determining module, configured to: in a case that a carrier switching is to be performed on a physical uplink control channel PUCCH communicated on a first carrier, determine a first PUCCH resource on a second carrier after PUCCH carrier switching in a predetermined manner, where the second carrier is a carrier for communicating PUCCH after switching.

Optionally, the determining module includes:
a first determining submodule, configured to determine, according to a starting symbol and a symbol length of a second PUCCH resource, a PUCCH resource in a time unit for communicating the PUCCH on the second carrier as the first PUCCH resource, where the second PUCCH resource is a PUCCH resource on the first carrier which corresponds to the PUCCH for which the carrier switching is performed.

Optionally, a frequency domain resource of the first PUCCH resource is the same as a frequency domain resource of the second PUCCH resource, and/or, a code domain resource of the first PUCCH resource is the same as a code domain resource of the second PUCCH resource.

Optionally, a unit of a time unit for communicating PUCCH on the first carrier is the same as a unit of a time unit for communicating PUCCH on the second carrier; or, the time unit for communicating PUCCH on the first carrier is less than or equal to the time unit for communicating PUCCH on the second carrier.

Optionally, the determining module includes:
a second determining submodule, configured to: in a case that the PUCCH for which the carrier switching is to be performed has at least a corresponding physical downlink control channel PDCCH, determine, according to a PUCCH resource indication field in a last PDCCH corresponding to the PUCCH for which the carrier switching is to be performed, a PUCCH resource from a pre-configured PUCCH resource set on the second carrier as the first PUCCH resource, wherein the pre-configured PUCCH resource set comprises one or more PUCCH resource sets.

Optionally, the determining module includes:
a third determining submodule, configured to: in a case that the PUCCH for which the carrier switching is to be performed has no corresponding PDCCH, determine a PUCCH resource from pre-configured PUCCH resources on the second carrier which correspond to semi-persistent uplink control information UCI as the first PUCCH resource.

Optionally, the determining module includes:

a fourth determining submodule, configured to determine a third PUCCH resource on the second carrier as the first PUCCH resource, where the third PUCCH resource is a pre-configured PUCCH resource on the second carrier, the third PUCCH resource is a first-type PUCCH resource, and the first-type PUCCH resource includes at least one of the following:
a PUCCH resource corresponding to a first type of preset PUCCH format; and
a PUCCH resource with a payload capacity greater than a preset threshold.

Optionally, the apparatus further includes:
a first processing module, configured to: in a case that a quantity of bits of UCI to be communicated on the first PUCCH resource is less than a predetermined threshold, supplement the UCI with information until the predetermined threshold is reached.

Optionally, the determining module includes:

a fifth determining submodule, configured to determine, according to a quantity of bits of UCI to be communicated on the first PUCCH resource, a PUCCH resource from one or more PUCCH resource sets pre-configured on the second carrier as the first PUCCH resource,
where the one or more PUCCH resource sets comprise at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with a payload capacity not exceeding the preset threshold or a resource corresponding to a second type of preset PUCCH format.

Optionally, the fifth determining submodule is further configured to:

in a case that the one or more PUCCH resource sets comprise only one first-type PUCCH resource and only one second-type PUCCH resource, determine a PUCCH resource corresponding to a quantity of bits of UCI carried on the PUCCH for which the carrier switching is to be performed as the first PUCCH resource; or
in a case that the one or more PUCCH resource sets comprise a plurality of first-type PUCCH resources and/or a plurality of second-type PUCCH resources, determine, according to the quantity of bits of UCI to be communicated on the first PUCCH resource, one type of PUCCH resources from the first-type PUCCH resources and the second-type PUCCH resources; and in a case that the determined one type of PUCCH resources comprises a plurality of PUCCH resources, determining a fourth PUCCH resource from the determined one type of PUCCH resources as the first PUCCH resource, and

where a starting position of the fourth PUCCH resource is not earlier than a starting position of a second PUCCH resource; or, the fourth PUCCH resource meets a processing time requirement for UCI communication, wherein the second PUCCH resource is a PUCCH resource on the first carrier which corresponds to the PUCCH for which the carrier switching is performed.

Optionally, the fifth determining submodule is further configured to:

in a case that the fourth PUCCH resource comprises a plurality of PUCCH resources, select a PUCCH resource from the plurality of PUCCH resources as the first PUCCH resource based on at least one of:

a starting position;

a quantity of occupied symbols;

a payload capacity; and

a resource number.

Optionally, the apparatus further includes:

a second processing module, configured to: in a case that the determined first PUCCH resource is the first-type PUCCH resource, determine, according to a quantity of bits of UCI carried by the first PUCCH resource, a quantity of resource blocks RBs actually occupied by the first PUCCH resource.

An embodiment of the present disclosure further provides a processor-readable storage medium, the processor-readable storage medium stores program instructions, and the program instructions are configured to cause the processor to execute the above-mentioned communication processing method for carrier switching.

The technical solution of the present disclosure has at least the following advantageous effects:

in the technical solution according to the embodiments of the present disclosure, when PUCCH carrier switching is to be performed, the PUCCH resource on the carrier after switching is determined in the predetermined manner, and the PUCCH resource for communicating PUCCH on the carrier after switching can be determined without requiring additional signaling notification or indication. In this way, the normal implementation of the communication with PUCCH carrier switching can be ensured without increasing additional signaling overhead.

## BRIEF DESCRIPTION OF THE DRAWINGS

FIG. 1 is a flowchart of a method according to an embodiment of the present disclosure;

FIG. 2 is a first schematic view of the method applied in a first scenario according to an embodiment of the present disclosure;

FIG. 3 is a second schematic view of the method applied in the first scenario according to an embodiment of the present disclosure;

FIG. 4 is a third schematic view of the method applied in the first scenario according to an embodiment of the present disclosure;

FIG. 5 is a fourth schematic view of the method applied in the first scenario according to an embodiment of the present disclosure;

FIG. 6 is a first schematic view of the method applied in a second scenario according to an embodiment of the present disclosure;

FIG. 7 is a second schematic view of the method applied in the second scenario according to an embodiment of the present disclosure;

FIG. 8 is a third schematic view of the method applied in the second scenario according to an embodiment of the present disclosure;

FIG. 9 is a structural block view of an apparatus according to an embodiment of the present disclosure; and

FIG. 10 is a module schematic view of an apparatus according to an embodiment of the present disclosure.

## DETAILED DESCRIPTION

The term "and/or" in embodiments of the present disclosure describes an association relationship for associated objects, which may indicate that there are three relationships. For example, A and/or B may represent these three situations: A alone, both A and B, and B alone. The character "/" generally indicates that the connected objects are in an "or" relationship.

The term "plurality of" in embodiments of the present application refers to two or more, and the same applies to other quantifiers.

The technical solution in embodiments of the present application will be clearly described in conjunction with the drawings in the embodiments of the present application. Obviously, the embodiments of this disclosure are only some of the embodiments of the present application, not all of embodiments. Based on the embodiments in the present application, all other embodiments obtained by those ordinarily skilled in the art without making creative efforts fall within the protection scope of the present application.

It should be known that UCI includes information such as HARQ-ACK, CSI, SR and the like, where ACK and NACK may be collectively called as HARQ-ACK, and the HARQ-ACK is used to provide feedback for a PDSCH or a physical downlink control channel (Physical Downlink Control Channel, PDCCH) for indicating semi-persistent scheduling (Semi-Persistent Scheduling, SPS) resource release (also known as SPS PDSCH release), to inform the base station whether the PDSCH or the PDCCH for indicating the SPS PDSCH release is received correctly; the CSI is used to feedback downlink channel quality, thereby helping the base station perform better downlink scheduling, such as selecting modulation and coding scheme (Modulation and Coding Scheme, MCS) and configuring appropriate resource block (Resource Block, RB) resources based on the CSI; and the SR is used to request the base station for a transmission resource of PUSCH carrying a uplink service when the terminal needs to transmit the uplink service. The UCI is communicated on the PUCCH. The PUCCH is communicated on a fixed carrier.

For the carrier aggregation (Carrier aggregation, CA) scenario, the PUCCH is communicated on the primary carrier (Primary Component Carrier, PCC) (or primary cell (Primary Cell, PCell), the same applies to the remaining of this disclosure). When the PUCCH communicated on the secondary carrier (Secondary Component Carrier, SCC) (or, secondary cell (Secondary Cell, SCell), the same applies to the remaining of this disclosure) is configured in the CA scenario, aggregated carriers may be divided into two PUCCH carrier groups, each PUCCH carrier group has a designated carrier for communicating the PUCCH. The carrier group including PCC is the primary PUCCH carrier group, the PUCCH is communicated on the PCC. The secondary PUCCH carrier group includes SCCs, one of the SCCs is configured by higher layer signaling for communicating the PUCCH, which is called PUCCH SCell. HARQ-ACKs for downlink communications (including PDSCH, type3 HARQ-ACK codebook transmission triggered by downlink control information (Downlink Control Information, DCI), and PDCCH requiring HARQ-ACK feedback such as PDCCH for indicating SPS resource release, PDCCH for indicating SCell dormancy, and the like) on all carriers in each carrier group are communicated via a PUCCH on a designated carrier. For the dual-connective (Dual-connective, DC) scenario, there are two carrier groups including a master carrier group (Master Carrier Group, MCG) and a secondary carrier group (Secondary Carrier Group, SCG), the PUCCH is communicated on a designated carrier in each carrier group, where the MCG includes a PCC, PUCCH is communicated on the PCC, what the SCG includes are all SCCs, and PUCCH is communicated on a pre-configured one of the SCCs (or called as PSCell).

5G NR supports a flexible timing relationship. For downlink communication with dynamic scheduling (i.e. communications scheduled by PDCCH or DCI) including PDCCH-scheduled PDSCH, type3 HARQ-ACK codebook transmission triggered by DCI, PDCCH that needs HARQ-ACK such as the PDCCH for indicating downlink resource release and the PDCCH for indicating SCell dormancy and the like, the slot or sub-slot for communicating the HARQ-ACK for said downlink communication may be determined based on a feedback timing indication field in a corresponding PDCCH or DCI (PDCCH and DCI may be considered as equivalent, DCI is a specific transmission format of PDCCH, and PDCCH is the channel for DCI transmission). PDSCH is taken as an example, PDCCH that carries scheduling information of the PDSCH indicates a scheduling timing relationship (Scheduling timing, namely K0) between PDSCH and PDCCH and a feedback timing relationship (HARQ-ACK timing, namely K1) between PDSCH and its corresponding HARQ-ACK. Specifically, a time domain resource allocation indication field in the DCI format used by PDCCH indicates a slot offset K0 between a slot where PDSCH is located and a slot where DCI is located; a PDSCH to HARQ-ACK feedback timing indication field in the DCI format indicates a quantity of slots K1 between the end of PDSCH and the start of HARQ-ACK, in other words, assuming that the uplink and downlink sub-carrier spaces (Sub-Carrier Space, SCS) are the same, HARQ-ACK communicated in slot n+K1 is for the PDSCH communicated in slot n.

A universal set for K1 is {0, 1, 2, 3, 4, 5, 6, 7, 8, 9, 10, 11, 12, 13, 14, 15}, and generally, at most 8 values may be configured for a terminal, where the value of K1 is in a unit (measure) of slot (slot). That is, K1=1 means that an interval is 1 slot. In addition, the value of K1 may be in a unit of slot or sub-slot (sub-slot), where the sub-slot may be pre-configured as having a length of 2 symbols (that is, there are 7 sub-slots sequentially in one slot), or a length of 7 symbols (that is, there are 2 sub-slots sequentially in one slot), and the like. Whether there is a feedback timing indication field in the DCI may be determined according to whether a quantity of indication bits configured by a higher layer signaling is greater than 0, or may be determined according to a quantity of elements in the feedback timing candidate value K1 set configured by a higher layer signaling. When the quantity of elements is greater than 1, the quantity of indication bits is determined according to the quantity of elements (for example, ceil ($\log_2 N$), N is the quantity of elements, and ceil is rounded up to an integer). When the quantity of elements is only one, there is no indication field in DCI, and the feedback timing is determined by directly using the value of the one element.

For semi-persistent (or semi-static) UCI, such as CSI, SR, and HARQ-ACK corresponding to SPS PDSCH (SPS HARQ-ACK for short), the slot or sub-slot for communicating the PUCCH carrying the semi-persistent UCI is determined in a semi-persistent manner, which is called as the semi-persistent feedback timing. For example, for CSI and SR, the slot where each transmission opportunity is located and the symbol position in the slot is determined according to the period and offset value configured by the higher layer signaling, and therefore, transmissions are periodically performed at the PUCCH resource configured by the higher layer signaling in the corresponding slot and corresponding symbol position. For SPS HARQ-ACK, the HARQ-ACK feedback position (that is, the slot or sub-slot where it is located) is determined according to the K1 value indicated by the feedback timing indication field in the PDCCH for indicating SPS PDSCH activation. If there is no feedback timing indication field in the PDCCH for indicating SPS PDSCH activation, the HARQ-ACK feedback position is determined according to the K1 value configured by the higher layer signaling.

For the PUCCH resource carrying CSI or SR, one PUCCH resource is configured by a higher layer signaling for each of CSI reports or SR, respectively. In a system, one or more PUCCH resource sets may be configured for the HARQ-ACK for carrying the downlink communication with dynamic scheduling. If only one PUCCH resource set is configured, the PUCCH resource for carrying HARQ-ACK of the downlink communication with dynamic scheduling may be one resource, which is selected from multiple resources in this resource set according to the PUCCH resource indication field in the scheduling PDCCH. If one resource set includes more than 8 resources, one resource may be selected from multiple resources according to a combination of CCE information of PDCCH and the PUCCH resource indication field therein. If multiple PUCCH resource sets are configured, then each PUCCH resource set corresponds to a different quantity of bits of UCI communication. In this case, one of the PUCCH resource sets is selected based on the quantity of bits of UCI carried by the PUCCH firstly, and then in the selected PUCCH resource set, one resource is selected from multiple resources in this resource set according to the PUCCH resource indication field in the scheduling PDCCH. If there is only one PUCCH resource in one resource set, there may be no PUCCH resource indication field in the PDCCH, and this one resource may be used directly for transmission.

Embodiments of the present disclosure provide a communication processing method and apparatus for carrier switching, where the method and the apparatus are conceived based on the same creative idea, since the principle for addressing the issue by the method and the apparatus is similar, the implementation of the apparatus and the method may be referred to each other, and the repetition thereof will be omitted.

As shown in FIG. 1, a communication processing method for carrier switching provided by an embodiment of the present disclosure, applied to a network-side device or a terminal, includes following step.

Step 101, in a case that a carrier switching is to be performed on a physical uplink control channel (PUCCH) communicated on a first carrier, determining a first PUCCH resource on a second carrier after PUCCH carrier switching in a predetermined manner, where the second carrier is a carrier for communicating PUCCH after switching.

In this way, the device that executes the method according to the above-mentioned embodiment of the present disclosure may determine the PUCCH resource on the carrier after switching in a predetermined manner when the PUCCH carrier switching is to be performed, and the PUCCH resource for communicating the PUCCH on the carrier after switching can be determined without requiring additional signaling notification or indication, such that the normal implementation of PUCCH communications on carriers without increasing additional signaling overhead.

The device that executes the method according to the above-mentioned embodiment of the present disclosure may be a network-side device or a terminal device. For the terminal device, the PUCCH is sent on the determined first PUCCH resource on the second carrier, and the PUCCH is no longer sent on the first carrier, such that the PUCCH is switched from the first carrier to the second carrier for communication. For the network-side device (such as a base station), the PUCCH is received on the determined first PUCCH resource on the second carrier, and the PUCCH is no longer received on the first carrier, such that the PUCCH is switched from the first carrier to the second carrier for communication.

In this embodiment, optionally, the determining the first PUCCH resource on the second carrier after the PUCCH carrier switching in the predetermined manner includes:

determining, according to a starting symbol and a symbol length of a second PUCCH resource, a PUCCH resource in a time unit for communicating the PUCCH on the second carrier as the first PUCCH resource, where the second PUCCH resource is a PUCCH resource on the first carrier which corresponds to the PUCCH for which the carrier switching is performed.

In other words, a manner 1 of determining the first PUCCH resource includes: determining, in a time unit for communicating the PUCCH on the second carrier, a PUCCH resource as the first PUCCH resource according to a starting symbol and a symbol length of a PUCCH resource on the first carrier which corresponds to the PUCCH for which the carrier switching is performed.

In this case, a unit of the time units on the first carrier and that of the second carrier may be the same or different. The unit of time unit may be one of slot and sub-slot, and the sub-slot may have different symbol lengths (such as a sub-slot with a length of 2 symbols, or a sub-slot with a length of 7 symbols, etc.).

Optionally, a frequency domain resource of the first PUCCH resource is the same as a frequency domain resource (for example, the quantity of RBs and their positions) of the second PUCCH resource.

Optionally, a code domain resource of the first PUCCH resource is the same as a code domain resource (for example, orthogonal sequence, cyclic shift, etc.) of the second PUCCH resource.

When performing the configuration, the network-side device may ensure that the RB set determined in this manner does not exceed a bandwidth range of the second carrier, or if it exceeds the bandwidth range of the second carrier, the communication is only performed on RBs included in the bandwidth range.

Optionally, the unit of the time unit for communicating PUCCH on the first carrier is the same as that of the time unit for communicating PUCCH on the second carrier; or, the time unit for communicating the PUCCH on the first carrier is less than or equal to the time unit for communicating the PUCCH on the second carrier.

In this way, for time unit 1 for communicating PUCCH on the first carrier and time unit 2 for communicating PUCCH on the second carrier, there may be following situations:

the unit of time unit 1 and that of time unit 2 are the same, that is, both of which have the same unit, such as both of which are slot, or both of which are sub-slot having the same length;

the unit of time unit 1 is less than or equal to that of time unit 2, that is, the quantity of symbols included in time unit 1 is less than or equal to the quantity of symbols included in time unit 2. If time unit 1 is slot, then time unit 2 is also slot; if time unit 1 is sub-slot with a length of 7 symbols, then time unit 2 may be slot or sub-slot with a length of 7 symbols.

If the type of PUCCH communication time unit is not configured on the second carrier, it is determined that the communication is performed according to the same PUCCH communication time unit on the first carrier, or a pre-defined PUCCH communication time unit.

In this embodiment, optionally, the determining the first PUCCH resource on the second carrier after the PUCCH carrier switching in the predetermined manner includes:

in a case that the PUCCH for which the carrier switching is to be performed has at least a corresponding PDCCH, determining, by the terminal according to a PUCCH resource indication field in a last PDCCH corresponding to the PUCCH for which the carrier switching is to be performed, a PUCCH resource in a pre-configured PUCCH resource set on the second carrier as the first PUCCH resource, where the pre-configured PUCCH resource set includes one or more PUCCH resource sets; or,

in a case that the PUCCH for which the carrier switching is to be performed has at least a corresponding PDCCH, determining, by the network-side device, a PUCCH resource in the pre-configured PUCCH resource set on the second carrier, and determining, by the network-side device, a PUCCH resource indication field in the PDCCH for indicating the determined PUCCH resource, and sending the PDCCH to the terminal, where the pre-configured PUCCH resource set includes one or more PUCCH resource sets.

The network-side device is configured to send the PDCCH carrying the PUCCH resource indication field, and the terminal is configured to receive the PDCCH carrying the PUCCH resource indication field.

Optionally, the determining the first PUCCH resource on the second carrier after the PUCCH carrier switching in the predetermined manner includes:

in a case that the PUCCH for which the carrier switching is to be performed has no corresponding PDCCH, determining a PUCCH resource in pre-configured PUCCH resources on the second carrier corresponding to semi-persistent UCI as the first PUCCH resource.

The PUCCH for which the carrier switching is to be performed has at least a corresponding PDCCH, means that, the PUCCH for which the carrier switching is to be performed carries dynamic UCI or the UCI to be communicated on the first PUCCH resource is dynamic UCI, an example of the dynamic UCI is HARQ-ACK, and the HARQ-ACK is HARQ-ACK for one of followings: PDSCH scheduled by the PDCCH, or PDCCH for indicating the release of the SPS PDSCH resource, or PDCCH for indicating the Scell Dormancy. Alternatively, the HARQ-ACK is HARQ-ACK for type3 codebook triggered by the DCI.

The PUCCH for which the carrier switching is to be performed has no corresponding PDCCH, means that, the PUCCH for which the carrier switching is to be performed carries semi-persistent UCI or the UCI to be communicated on the first PUCCH resource is semi-persistent UCI, an example of semi-persistent UCI is SPS HARQ-ACK (that is, HARQ-ACK for SPS PDSCH), CSI (periodic CSI or SP-CSI), SR, etc. In this embodiment, a corresponding PUCCH resource is pre-configured for each type of semi-persistent UCI on the second carrier, and therefore, the determining a PUCCH resource in the pre-configured PUCCH resource on the second carrier corresponding to semi-persistent UCI as the first PUCCH resource specifically includes: determining the first PUCCH resource according to a type of the UCI carried on the PUCCH for which the carrier switching is to be performed; if a plurality of PUCCH resources are pre-configured for the same type of UCI on the second carrier, selecting, according to the quantity of bits of this type of UCI, a PUCCH resource from the plurality of resources corresponding to this type of UCI as the first PUCCH resource.

That is, in a manner 2 of determining the first PUCCH resource, the determination is made according to whether the PUCCH for which the carrier switching is to be performed has at least a corresponding PDCCH or whether the type of carried UCI is dynamic or semi-persistent UCI.

If there is a corresponding PDCCH or the type of carried UCI is dynamic UCI, then a PUCCH resource is further determined in the pre-configured PUCCH resource set (the resource set here is a resource set configured for communicating PUCCH having a corresponding PDCCH, which may be configured to be dedicated to the carrier switching on the second carrier, or may be PUCCH resources for other purposes on the second carrier) on the second carrier as the first PUCCH resource according to the PUCCH resource indication field in the last PDCCH corresponding to the PUCCH for which the carrier switching is to be performed.

If there is no corresponding PDCCH or the type of carried UCI is semi-persistent UCI, then a PUCCH resource is further determined in the pre-configured PUCCH resources (the resources here may be resources configured be dedicated to PUCCH carrier switching on the second carrier, or may be PUCCH resources for other purposes on the second carrier) corresponding to the semi-persistent UCI on the second carrier as the first PUCCH resource.

The pre-configured PUCCH resource set may be one or more PUCCH resource sets. When the pre-configured PUCCH resource set includes a plurality of PUCCH resource sets, with different PUCCH resource sets carry different quantity of bits of UCI correspondingly, one candidate resource set may be selected from the plurality of PUCCH resource sets according to the quantity of bits of UCI that needs to be communicated on the first PUCCH resource at first; and then a PUCCH resource is determined in the candidate resource set as the first PUCCH resource according to the above-mentioned PUCCH resource indication field.

In this embodiment, the UCI to be communicated on the first PUCCH resource may be all or part of information of the UCI originally carried in the PUCCH for which the PUCCH carrier switching is to be performed (that is to say, it may be specified that when performing the PUCCH carrier switching, part of UCI on the PUCCH before switching, such as CSI, may be discarded, and only part of UCI, such as HARQ-ACK, may be switched to a new carrier for PUCCH communication), the PUCCH for which the PUCCH carrier switching is to be performed refers to the PUCCH that should be originally communicated on the first carrier, but according to the PUCCH carrier switching rule, it is determined that it needs to be switched to the second carrier for communication.

In this embodiment, optionally, the determining the first PUCCH resource on the second carrier after PUCCH carrier switching in the predetermined manner includes:

determining a third PUCCH resource on the second carrier as the first PUCCH resource, where the third PUCCH resource is one pre-configured PUCCH resource on the second carrier, the third PUCCH resource is a first-type PUCCH resource, and the first-type PUCCH resource includes at least one of the following:
a PUCCH resource corresponding to a first type of preset PUCCH format;
a PUCCH resource with a payload capacity greater than a preset threshold.

That is, a manner 3 of determining the first PUCCH resource includes: using a PUCCH resource pre-configured on the second carrier as the first PUCCH resource. Here, the pre-configured PUCCH resource may be a resource configured on the second carrier which is dedicated to the PUCCH carrier switching, or may be a PUCCH resource for other purposes on the second carrier.

The first type of preset PUCCH format includes: PUCCH format 2, 3 and 4. The preset threshold may be 2 bits. That is, the third PUCCH resource is the first-type PUCCH resource, which may be a PUCCH resource with a large payload capacity, so that any quantity of bits of UCI carried on the PUCCH for which the carrier switching is to be performed can be carried through this third PUCCH resource. This PUCCH resource may be used for communicating any UCI (dynamic or semi-persistent) and any quantity of bits. In order to make large bits and small bits can use this resource for transmission, the payload capacity of this resource shall be large enough, for example, more RB resources are configured for this resource, so that one PUCCH resource can be used to support the communication of UCI with any quantity of bits including 1-2 bits and arbitrary bits more than 2 bits, for example, the one PUCCH resource may support 1-bit or 2-bits communication, or may support 3-bits communication, or even 100-bits communication. In order to reduce the communication overhead, when using this PUCCH resource for communication, the quantity of RBs (RBmin) actually occupied by the PUCCH resource can be determined according to the bits of UCI carried by the PUCCH, and the PUCCH resource is used for communication according to the actual quantity of RBs occupied, thereby reducing the resource overhead.

Here, the PUCCH resource pre-configured on the second carrier for communication after PUCCH carrier switching may be configured for each of terminals that may perform the PUCCH carrier switching, that is to say, on the second carrier such resource is configured per-UE; alternatively, on the second carrier, carrier-specific PUCCH resources for communication after the PUCCH carrier switching may be configured, and these PUCCH resources are not dedicated to a certain UE, and these PUCCH resources may be used by any UE switched to the second carrier. In other words, these PUCCH resources are shared by multiple UEs that may perform the PUCCH carrier switching.

In addition, in this embodiment, the method further includes: in a case that a quantity of bits of the UCI to be communicated on the first PUCCH resource is less than a predetermined threshold, supplementing the UCI with information until the predetermined threshold is reached.

In this way, for a PUCCH resource in which UCI is communicated in a coding manner, considering that the coding manner is performed for the UCI whose bit number is not less than the predetermined threshold, the predetermined threshold may be 3 bits, therefore, based on the pre-configured predetermined threshold, if the quantity of bits of the UCI to be communicated on the first PUCCH resource is less than the predetermined threshold, information will be supplemented to the UCI until the predetermined threshold is reached, so that the UCI can be communicated in the coding manner.

The supplementing the UCI with information may include adding bit(s) at the tail (or head) of the UCI. Moreover, the added bit may be a placeholder bit, or a repetition of original information bit of the UCI, or the like.

In this embodiment, optionally, the determining the first PUCCH resource on the second carrier after the PUCCH carrier switching in the predetermined manner includes:

determining, according to the quantity of bits of UCI to be communicated on the first PUCCH resource, a PUCCH resource in one or more PUCCH resource sets pre-configured on the second carrier as the first PUCCH resource, where the one or more PUCCH resource sets include at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with the payload capacity not exceeding the preset threshold or a resource corresponding to a second type of preset PUCCH format.

That is, a manner 4 of determining the first PUCCH resource includes: pre-configuring one or more PUCCH resource sets on the second carrier, where the one or more PUCCH resource sets include at least two types of PUCCH resources (one type is a PUCCH resource with a payload capacity greater than the preset threshold or a resource corresponding to a first-type preset PUCCH format, the other type is a PUCCH resource with a payload capacity not exceeding the preset threshold or a resource corresponding to a second type of preset PUCCH format), and determining a PUCCH resource in the one or more PUCCH resource sets (the one or more resource sets here may be resources on the second carrier which are configured to be dedicated to the PUCCH carrier switching, or may be PUCCH resources for other purposes on the second carrier) as the first PUCCH resource according to the quantity of bits of UCI to be communicated on the first PUCCH resource.

Here, the first-type PUCCH resource can be known as a large-capacity PUCCH resource from the above, and the second-type PUCCH resource is a PUCCH resource with the payload capacity not exceeding the preset threshold or the resource corresponding to the second type of preset PUCCH format, the second type of preset PUCCH format includes: PUCCH format 0 and 1, that is, the second-type PUCCH resource is a small-capacity PUCCH resource. In this case, the configured one or more PUCCH resource sets take the communication of large bits and small bits into account.

The one or more PUCCH resource sets pre-configured on the second carrier may be configured for each of terminals that may perform the PUCCH carrier switching, that is to say, on the second carrier, such resource sets are configured per-UE. Alternatively, carrier-specific PUCCH resource sets for the PUCCH carrier switching transmission are configured on the second carrier, and these PUCCH resource sets are not dedicated to a certain UE, and these PUCCH resource sets may be used by any UE switched to the second carrier. In other words, these PUCCH resource sets are shared by multiple UEs that may perform the PUCCH carrier switching.

The one or more PUCCH resource sets may be configured to include only one first-type PUCCH resource and one second-type PUCCH resource from the perspective of configuring a small quantity of resources; or may be configured to include a plurality of first-type PUCCH resources and/or a plurality of second-type PUCCH resources from the perspective of flexibility and processing latency.

Therefore, in one aspect, optionally, the determining the PUCCH resource in one or more PUCCH resource sets pre-configured on the second carrier as the first PUCCH resource includes:

in a case that the one or more PUCCH resource sets include only one first-type PUCCH resource and only one second-type PUCCH resource, determining a PUCCH resource corresponding to the quantity of bits of UCI carried on the PUCCH for which the carrier switching is to be performed as the first PUCCH resource.

In this way, a suitable resource is selected from the two resources as the first PUCCH resource which is corresponding to the quantity of bits of UCI carried on the PUCCH for which the carrier switching is to be performed, where the one second-type PUCCH resource (small-capacity PUCCH (no more than 2 bits)) can always be configured according to the payload capacity of 2 bits, such as configured as PUCCH format 0. Accordingly, when the resource of PUCCH format 0 is determined as the first PUCCH resource, 4 cyclic shifts will be occupied when communicating HARQ-ACK, the 4 cyclic shifts respectively correspond to 4 combined states ({ACK, ACK}, {NACK, NACK }, {ACK, NACK}, {NACK, ACK}) of 2-bits HARQ-ACK. If only 1-bit UCI is communicated, it can be supplemented into 2 bits such as 1-bit NACK may be supplemented, one of the 4 cyclic shifts may be selected according to the state corresponding relationship between the 4 cyclic shifts and the 2-bits HARQ-ACK, and the selected cyclic shift is used for communication. Alternatively, it can also always be configured according to 1-bit payload capacity, and accordingly, when the resource with 1-bit payload capacity is determined as the first PUCCH resource, if 2-bits UCI needs to be communicated, the 2-bits UCI is combined to obtain 1-bit UCI and then communicated. The first-type PUCCH resource (large-capacity PUCCH (greater than 2 bits)) can be configured with relatively large capacity, such as configuring more RBs, so that one PUCCH resource can support the communication of UCI with a relatively large quantity of bits of 2 bits or more. For example, 3 bits may be communicated by using this PUCCH resource, and 100 bits can also be communicated by using this PUCCH resource. In order to reduce communication overhead, when this PUCCH resource is used for communication, the quantity of RBs (RBmin) actually occupied by the PUCCH resource can be determined according to the bits of UCI carried by the PUCCH, and the PUCCH resource is used for communication according to the actually occupied quantity of RBs, thereby reducing the resource overhead.

In another aspect, optionally, the determining the PUCCH resource in one or more PUCCH resource sets pre-configured on the second carrier as the first PUCCH resource includes:
in a case that the one or more PUCCH resource sets include a plurality of first-type PUCCH resources and/or a plurality of second-type PUCCH resources, determining one type of PUCCH resources from the first-type PUCCH resources and the second-type PUCCH resources according to the quantity of bits of UCI to be communicated on the first PUCCH resource; and in a case that the determined one type of PUCCH resource includes a plurality of PUCCH resources, determining a fourth PUCCH resource in the determined one type of PUCCH resources as the first PUCCH resource; where a starting position of the fourth PUCCH resource is not earlier than a starting position of a second PUCCH resource; or, the fourth PUCCH resource meets the processing time requirement of UCI communication, and the second PUCCH resource is a PUCCH resource on the first carrier which corresponds to the PUCCH for which the carrier switching is performed.

Here, for the one or more PUCCH resource sets configured to include multiple first-type PUCCH resources and/or multiple second-type PUCCH resources, one type of resources is firstly selected between the large-capacity type and small-capacity type (that is, one type of PUCCH resources is determined from the first-type PUCCH resources and the second-type PUCCH resources), according to the quantity of bits of UCI to be communicated on the first PUCCH resource. Afterwards, a PUCCH resource whose starting position is not earlier than that of the PUCCH resource on the first carrier corresponding to the PUCCH for which the carrier switching is performed, or a PUCCH resource (i.e. the fourth resource) that meets the processing time requirement of UCI communication is selected as the first PUCCH resource from the plurality of PUCCH resources of the determined one type of PUCCH resources. In a case that the starting position of the fourth PUCCH resource is not earlier than that of the PUCCH resource on the first carrier corresponding to the PUCCH for which the carrier switching is performed, and the fourth PUCCH resource is within in the time units determined for communicating the PUCCH on the second carrier.

Considering that there may be a plurality of resources in the fourth PUCCH resource, optionally, determining the fourth PUCCH resource as the first PUCCH resource includes:

> in a case that the fourth PUCCH resource includes a plurality of PUCCH resources, selecting a PUCCH resource from the plurality of PUCCH resources as the first PUCCH resource based on at least one of followings:
> a starting position;
> a quantity of occupied symbols;
> a payload capacity;
> resource number.

Specifically, a PUCCH resource with the earliest starting symbol, a PUCCH resource with the smallest quantity of occupied symbols, a PUCCH resource with the smallest payload capacity, or, a PUCCH resource with smallest PUCCH resource number may be selected from the multiple PUCCH resources as the first PUCCH resource based on any of the above-mentioned items. In this case, one unique PUCCH resource may be selected based on a selected piece of information, that is, there are no multiple PUCCH resources that meet this selection rule. For example, when selecting the one PUCCH resource with the earliest starting symbol, the configuration by the base station ensures that starting symbols of multiple resources are different.

Alternatively, the selection may be based on a combination of multiple items. From the perspective of communication latency, the one PUCCH resource with the earliest starting symbol is selected, or the one PUCCH resource with the smallest quantity of occupied symbols is selected. If the starting symbols or the quantity of occupied symbols of multiple PUCCH resources are the same, then the one PUCCH resource with the smallest payload capacity is selected (from the perspective of overhead), and if the capacity is also the same, the one PUCCH resource with the smallest PUCCH resource number is selected. Similarly, the order which of different selection rules is applied first can be adjusted.

The processing time requirement for UCI communication may be time required for preparing UCI communication, including time for processing downlink communication. For example, when HARQ-ACK is communicated on the PUCCH, an ending position of the downlink communication (including PDSCH, and PDCCH which the HARQ-ACK feedback is required such as PDCCH for indicating SPS resource release and PDCCH for indicating SCell dormancy) whose HARQ-ACK is to be communicated on the PUCCH and a starting position of the PUCCH meets a fixed time interval, where the time interval is time required for PDSCH processing and for preparing HARQ-ACK communication on the PUCCH. This time interval is the processing time requirement for UCI communication, for example, it is defined as $T_{proc,1} = ((N_1 + d_{1,1} + d_{1,2})(2048+144) \cdot \kappa 2^{-\mu}) \cdot T_C$, where $N_1$ is processing time related to a capability for processing the PDSCH requiring the HARQ-ACK feedback, a value of which is selected in a processing capability list according to the reference $\mu$; $\kappa$ is a ratio of LTE sampling interval to NR sampling interval; $\mu$ is an index of the SCS; the reference $\mu$ is a minimum value of $\mu$ corresponding to the PDCCH scheduling the PDSCH, $\mu$ corresponding to the PDSCH itself, and $\mu$ corresponding to the PUCCH itself, etc.; $T_C$ is the NR sampling interval, and $d_{1,1}$ is a processing time offset value for HARQ-ACK communicated on different uplink channels, if communicated on the PUCCH, $d_{1,1} = 0$, if communicated on the PUSCH, $d_{1,1} = 1$, $d_{1,2}$ is a processing time offset related to the quantity of symbols occupied by the PDSCH.

Optionally, the method further includes:

in a case that the determined first PUCCH resource is the first-type PUCCH resource, determining a quantity of resource blocks (RBs) actually occupied by the first PUCCH resource according to the quantity of bits of UCI carried by the first PUCCH resource.

That is to say, the first PUCCH resource determined in the above-mentioned manner is a large-capacity resource, and the quantity of RBs actually occupied by the first PUCCH resource is determined by the quantity of bits of UCI carried by the first PUCCH resource, thereby reducing the PUCCH resource overhead in the actual communication.

In this embodiment, it should be understood that the manner 1 may be applicable to the dynamic UCI and semi-persistent UCI, and may be applicable to the PUCCH carrier switching triggered in an explicit manner (for example, there is an explicit signaling indication) or an implicit manner (for example, according to a specified rule or configured by higher layer signaling). The manner 3 and manner 4 are applicable to both the dynamic UCI and semi-persistent UCI.

In this embodiment, it should also be understood that the pre-configuration may be configured through the higher layer signaling.

The application of the method in the embodiments of the present disclosure will be described hereinafter in conjunction with specific scenarios illustrated in the drawings.

First scenario: the first carrier is a carrier originally configured to communicate PUCCH (such as PCell or PUCCH Scell or PScell, etc.), and the second carrier is a carrier for communicating PUCCH through the carrier switching, the SCS of the first carrier and the SCS of the second carrier are the same, the PUCCHs on the first carrier and the second carrier are communicated according to slot as the unit of the time unit, that is, the time domain resource of each PUCCH will not exceed one slot, namely, a unit of feedback timing on the first carrier is slot (that is, the unit of PUCCH communication time unit). According to the k1 indicated by the feedback timing indication field in the PDCCH, and a slot m where PDSCH transmission scheduled by the PDCCH is located, it is determined that the HARQ-ACK feedback for the PDSCH is communicated in slot (m+k1), i.e., in slot n (specifically, the communication resource in slot n, such as symbol positions and RB resources, may be obtained according to the PUCCH resource indication field in the PDCCH, which will not be described again). When it is determined that the PUCCH communication is to be performed in the slot n on the first carrier, and according to a rule of PUCCH carrier switching, it is determined that the PUCCH carrier switching is to be performed for the slot n on the first carrier, to switch to the slot n on the second carrier for communication. In this case, Different manners may be adopted.

According to manner 1, assuming that the starting symbol of the PUCCH resource in the slot n on the first carrier is symbol A and the PUCCH resource occupies B symbols, and then it may be determined that the PUCCH resource communicated in the slot n on the second carrier is a PUCCH resource having starting symbol A in slot n and occupying B symbols, which is illustrated in FIG. 2. In this case, the quantity of position of RBs and occupied by the determined PUCCH resource in the frequency domain are the same as the quantity and position of RBs corresponding to the PUCCH resource on the first carrier. Therefore, the PUCCH resource communicated on a target carrier after the PUCCH carrier switching is performed may be determined without any additional signaling indication.

According to manner 2, a PUCCH resource may be determined from a pre-configured PUCCH resource set on the second carrier according to the PUCCH resource indication field in the PDCCH (that is, the PDCCH scheduling PDSCH) corresponding to the PUCCH on the first carrier, then a time domain position and RB in the frequency domain and optionally a code domain information (cyclic shift, orthogonal sequence) and the like that may be used of this PUCCH resource may be independent of the PUCCH resource on the first carrier, which may be different from that of the PUCCH resource on the first carrier, as shown in FIG. 3.

According to manner 3, it is assumed that only one large-capacity PUCCH resource is configured on the second carrier, such as PUCCH format 3 occupying N RBs, then this resource will be used no matter which PUCCH on the first carrier is switched to the second carrier for communication. Therefore, the time domain position of the PUCCH resource for the PUCCH communication after switching on the second carrier is fixed. For a quantity of RBs actually occupied in the frequency domain, the minimum quantity of RBs RBmin actually required to communicate the quantity of bits of UCI may be obtained by calculation according to the quantity of bits of UCI that is switched for communication and some transmission parameters of the PUCCH resource on the second carrier, such as code rate, the quantity of time domain symbols, DMRS position, orthogonal sequence, modulation order, that may affect the payload capacity. For example, the $M_{\mathrm{RB,min}}^{\mathrm{PUCCH}}$ value that meets the following formula is the minimum quantity of RBs, where r is the code rate, $Q_m$ is the modulation order, $N_{\mathrm{symb\text{-}UCI}}^{\mathrm{PUCCH}}$ is the quantity of symbols for communicating UCI in the symbols occupied by PUCCH (that is, symbols other than symbols occupied by DMRS), $N_{\mathrm{sc,ctrl}}^{\mathrm{RB}}$ is the quantity of subcarriers included in one RB, $O_{CRC}$ is the quantity of bits of CRC added for encoding, $O_{ACK}$ is the quantity of bits of HARQ-ACK (if it is another UCI, it is the quantity of bits of the other UCI) carried by PUCCH, the formula is $\left(O_{\mathrm{ACK}}+O_{\mathrm{CRC}}\right) \leq M_{\mathrm{RB,min}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} \cdot Q_m \cdot r$. This manner is shown in FIG. 4.

According to manner 4, it is assumed that two PUCCH resources are configured on the second carrier, one is a large-capacity PUCCH resource such as PUCCH format 3 occupying N RBs, and the other is a small-capacity PUCCH resource such as PUCCH format 0. One PUCCH resource is selected from the two PUCCH resources configured on the second carrier according to the quantity of bits of UCI carried by the PUCCH which is switched from the first carrier to the second carrier for communication. For example, if the quantity of bits of UCI is determined to not exceed 2 bits, the small-capacity PUCCH resource may be selected; for another example, if the quantity of bits of UCI is determined to exceed 2 bits, then the large-capacity PUCCH resource may be selected, and the RBmin actually occupied is determined in the same manner as those described in the above-mentioned manner 3. The example diagram is similar to FIG. 4, with a difference lies in that the resource is selected from multiple resources.

In this scenario, the terminal side and the base station side determine, in the same manner, the PUCCH resource in the time unit for communicating the PUCCH after switching on the second carrier, the terminal side sends the PUCCH on the determined PUCCH resource, and the base station side receives the PUCCH on the determined PUCCH resource.

It is also applicable to replace HARQ-ACK carried by PUCCH with HARQ-ACK or CSI or SR for SPS PDSCH carried by PUCCH, the difference is that the PUCCH resource on the first carrier is determined according to the method of obtaining the PUCCH resource carrying the HARQ-ACK or CSI or SR for the SPS PDSCH, so as to obtain the starting symbol of the PUCCH resource and the quantity of symbols occupied by the PUCCH resource on the first carrier, and then mapping the same to corresponding symbol(s) in a corresponding slot on the second carrier for communication.

In addition, if the PUCCH communication time unit of the first carrier is changed to be a sub-slot with a length of 7 symbols, the unit of the feedback timing k1 on the first carrier may also be a sub-slot. PUCCH communication is determined, according to the feedback timing, to be performed in sub-slot (m+k1) of the first carrier, that is, sub-slot 2n. According to the rule of PUCCH carrier switching, it is determined that the PUCCH carrier switching is to be performed for the sub-slot 2n on the first carrier, to switch to slot n on the second carrier for communication. The specific processing manner is the same as above, which will not be described again here. The difference is that the slot on the first carrier in the above-mentioned figures are all replaced by sub-slots, an example is given in FIG. 5.

Second scenario: on the basis of the first scenario, if the SCSs of the first carrier and the second carrier are different, in an example in which, the SCS of the first carrier is 15kHz, the SCS of the second carrier is 30kHz, and the unit of the time units on the two carriers are all slot, the PUCCH communication is determined to be performed in slot (m+k1), i.e., slot n on the first carrier according to the feedback timing, that is, , and according to the rule of PUCCH carrier switching, it is determined that the PUCCH carrier switching is to be performed in the slot n on the first carrier, to switch to slot 2n on the second carrier for communication. In this case, Different manners may be adopted.

According to manner 1, assuming that the starting symbol of the PUCCH resource in the slot n on the first carrier is symbol A and the PUCCH resource occupies B symbols, and then it may be determined that the PUCCH resource communicated in the slot 2n on the second carrier is a PUCCH resource having starting symbol A in slot 2n and occupying B symbols, which is illustrated in FIG. 2. In this case, although the serial number of the start symbol and the quantity of occupied symbols are the same, the time length of one symbol on each of the two carriers is different, that is, one symbol on the first carrier corresponds to 2 symbols on the second carrier in time length. The communication length of the PUCCH resource determined on the second carrier is half of that of the PUCCH resource on the first carrier in the time domain, as shown in FIG. 6. The quantity and position of RBs occupied by this PUCCH resource are the same as the quantity and position of RBs corresponding to the PUCCH resource on the first carrier in the frequency domain. Therefore, the resources for communicating the PUCCH on a target carrier after PUCCH carrier switching may be determined without any additional signaling indications.

According to manner 2, a PUCCH resource may be determined from a pre-configured PUCCH resource set on the second carrier according to the PUCCH resource indication field in the PDCCH (that is, the PDCCH scheduling PDSCH) corresponding to the PUCCH on the first carrier, then a time domain position and RB in the frequency domain and optionally a code domain information (cyclic shift, orthogonal sequence) and the like that may be used of this PUCCH resource may be independent of the PUCCH resource on the first carrier, which may be different from that of the PUCCH resource on the first carrier, as shown in FIG. 7.

According to manner 3, it is assumed that only one large-capacity PUCCH resource is configured on the second carrier, such as PUCCH format 3 occupying N RBs, then this resource will be used no matter which PUCCH on the first carrier is switched to the second carrier for communication. Therefore, the time domain position of the PUCCH resource for the PUCCH communication after switching on the second carrier is fixed. A quantity of RBs actually occupied in the frequency domain may be obtained in a manner similar to that in the embodiment of first scenario, as shown in FIG. 8.

According to manner 4, it is assumed that two PUCCH resources are configured on the second carrier, one is a large-capacity PUCCH resource such as PUCCH format 3 occupying N RBs, and the other is a small-capacity PUCCH resource such as PUCCH format 0. One PUCCH resource is selected from the two PUCCH resources configured on the second carrier according to the quantity of bits of UCI carried by the PUCCH which is switched from the first carrier to the second carrier for communication. For example, if the quantity of bits of UCI is determined to not exceed 2 bits, the small-capacity PUCCH resource may be selected; for another example, if the quantity of bits of UCI is determined to exceed 2 bits, then the large-capacity PUCCH resource may be selected, and the RBmin actually occupied is determined in the same manner as those described in the above-mentioned manner 3. The example figure is similar to FIG. 8, with a difference lies in that the resource is selected from multiple resources.

In the second scenario, the terminal side and the base station side determine, in the same manner, the PUCCH resource in the time unit for communicating the PUCCH after switching on the second carrier, the terminal side sends the PUCCH on the determined PUCCH resource, and the base station side receives the PUCCH on the determined PUCCH resource.

In the foregoing embodiments, changing the combination of the SCSs of the first carrier and the second carrier is also applicable, which will not be repeated here.

It should be noted that the slot or sub-slot is only used as example for the unit of time units in this embodiment, the time unit on any carrier may be changed to one of the slot or sub-slot, or a sub-slot with different quantity of symbols respectively on the two carriers may be adopted, for example, one sub-slot having 2 symbols, and the other sub-slot having 7 symbols, the specific manners therefor are similar and will not be described again. In this embodiment, the PUCCH carrying HARQ-ACK for PDSCH scheduled by PDCCH is taken as an example, a case in which the PDSCH scheduling the PDCCH is replaced with the PDCCH requiring HARQ-ACK feedback is similar, with a difference lies in that the HARQ-ACK may be the HARQ-ACK for the PDCCH itself in this case. A case in which the PUCCH carries other UCI is also similar, the difference may lie in that, for CSI and/or SR, a first time unit where the PUCCH is communicated on the first carrier and specific resources therein are determined according to a higher layer signaling configuration, not notified based on PDCCH.

To sum up, with the communication processing method for carrier switching in the embodiments of the present disclosure, when the PUCCH carrier switching is to be performed, the PUCCH resource on the carrier after switching is determined in the predetermined manner, such that the PUCCH resource for communicating PUCCH on the carrier after switching can be determined without requiring additional signaling notification or indication, and the normal implementation of the communication with PUCCH carrier switching can be ensured without increasing additional signaling overhead.

As shown in FIG. 9, an embodiment of the present disclosure further provides a communication processing apparatus for carrier switching, the communication processing apparatus for carrier switching is a network-side device or a terminal, including: a memory 920, a transceiver 910, a processor 900, where the memory 920 is configured to store program instructions; the transceiver 910 is configured to send and receive data under the control of the processor 900; and the processor 900 is configured to read the program instructions in the memory 920 and perform the following operations:

in a case that a carrier switching is to be performed on a physical uplink control channel (PUCCH) communicated on a first carrier, determining a first PUCCH resource on a second carrier after PUCCH carrier switching in a predetermined manner, where the second carrier is a carrier for communicating PUCCH after switching.

Optionally, the processor is configured to read the program instructions in the memory to perform following operation:

determining, according to a starting symbol and a symbol length of a second PUCCH resource, a PUCCH resource in a time unit for communicating the PUCCH on the second carrier as the first PUCCH resource, where the second PUCCH resource is a PUCCH resource on the first carrier which corresponds to the PUCCH for which the carrier switching is performed.

Optionally, a frequency domain resource of the first PUCCH resource is the same as a frequency domain resource of the second PUCCH resource, and/or, a code domain resource of the first PUCCH resource is the same as a code domain resource of the second PUCCH resource.

Optionally, a unit of a time unit for communicating PUCCH on the first carrier is the same as that of a time unit for communicating PUCCH on the second carrier; or, the time unit for communicating the PUCCH on the first carrier is less than or equal to the time unit for communicating the PUCCH on the second carrier.

Optionally, the processor is configured to read the program instructions in the memory to perform following operation:

in a case that the PUCCH for which the carrier switching is to be performed has at least a corresponding PDCCH, determining, according to a PUCCH resource indication field in a last PDCCH corresponding to the PUCCH for which the carrier switching is to be performed, a PUCCH resource in a pre-configured PUCCH resource set on the second carrier as the first PUCCH resource; where the pre-configured PUCCH resource set includes one or more PUCCH resource sets; or,

in a case that the PUCCH for which the carrier switching is to be performed has at least a corresponding PDCCH, determining a PUCCH resource in the pre-configured PUCCH resource set on the second carrier, determining a PUCCH resource indication field in the PDCCH for indicating the determined PUCCH resource, and sending the PDCCH to the terminal; where the pre-configured PUCCH resource set includes one or more PUCCH resource sets.

The network-side device is configured to send the PDCCH carrying the PUCCH resource indication field, and the terminal is configured to receive the PDCCH carrying the PUCCH resource indication field.

Optionally, the processor is configured to read the program instructions in the memory to perform following operation:
in a case that the PUCCH for which the carrier switching is to be performed has no corresponding PDCCH, determining a PUCCH resource in pre-configured PUCCH resources on the second carrier corresponding to semi-persistent UCI as the first PUCCH resource.

Optionally, the processor is configured to read the program instructions in the memory to perform following operation:

determining a third PUCCH resource on the second carrier as the first PUCCH resource, where the third PUCCH resource is a pre-configured PUCCH resource on the second carrier, the third PUCCH resource is a first-type PUCCH resource, and the first-type PUCCH resource includes at least one of the following:
a PUCCH resource corresponding to a first type of preset PUCCH format;
a PUCCH resource with a payload capacity greater than a preset threshold.

Optionally, the processor is configured to read the program instructions in the memory to perform following operation:
in a case that a quantity of bits of UCI to be communicated on the first PUCCH resource is less than a predetermined threshold, supplementing the UCI with information until the predetermined threshold is reached.

Optionally, the processor is configured to read the program instructions in the memory to perform following operation:
determining, according to the quantity of bits of UCI to be communicated on the first PUCCH resource, a PUCCH resource in one or more PUCCH resource sets pre-configured on the second carrier as the first PUCCH resource, where the one or more PUCCH resource sets include at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with the payload capacity not exceeding the preset threshold or a resource corresponding to a second type of preset PUCCH format.

Optionally, the processor is configured to read the program instructions in the memory to perform following operation:

in a case that the one or more PUCCH resource sets include only one first-type PUCCH resource and only one second-type PUCCH resource, determining a PUCCH resource corresponding to the quantity of bits of UCI carried on the PUCCH for which the carrier switching is to be performed as the first PUCCH resource; or,

in a case that the one or more PUCCH resource sets include a plurality of first-type PUCCH resources and/or a plurality of second-type PUCCH resources, determining one type of PUCCH resources from the first-type PUCCH resources and the second-type PUCCH resources according to the quantity of bits of UCI to be communicated on the first PUCCH resource; and in a case that the determined one type of PUCCH resource includes a plurality of PUCCH resources, determining a fourth PUCCH resource in the determined one type of PUCCH resources as the first PUCCH resource,

where a starting position of the fourth PUCCH resource is not earlier than a starting position of a second PUCCH resource; or, the fourth PUCCH resource meets a processing time requirement of UCI communication, and the second PUCCH resource is a PUCCH resource on the first carrier which corresponds to the PUCCH for which the carrier switching is performed.

Optionally, the processor is configured to read the program instructions in the memory to perform following operation:

in a case that the fourth PUCCH resource includes a plurality of PUCCH resources, selecting a PUCCH resource from the plurality of PUCCH resources as the first PUCCH resource based on at least one of:

a starting position;
a quantity of occupied symbols;
a payload capacity; and
a resource number.

Optionally, the processor is configured to read the program instructions in the memory to perform following operation:
in a case that the determined first PUCCH resource is the first-type PUCCH resource, determining a quantity of resource blocks (RBs) actually occupied by the first PUCCH resource according to the quantity of bits of UCI carried by the first PUCCH resource.

In FIG. 9, the bus architecture may include any quantity of interconnected buses and bridges, specifically, for connecting various circuits including one or more processors represented by the processor 900 and memory(s) represented by the memory 920 together. The bus architecture can also link various other circuits such as peripherals, voltage regulators, and power management circuits together, which are all well known in the art and therefore will not be described further herein. The bus interface provides an interface. The transceiver 910 may include a plurality of elements including a transmitter and a receiver, which provide a unit for communicating with various other apparatuses over transmission medium, the transmission medium includes wireless channel, wired channel, optical cable, and the like. The processor 900 is responsible for managing the bus architecture and general processing, and the memory 920 can store data to be used by the processor 910 when performing operations.

The processor 900 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), the processor may also adopt a multi-core architecture.

With the apparatus in the embodiments of the present disclosure, when the PUCCH carrier switching is to be performed, the PUCCH resource on the carrier after switching is determined in the predetermined manner, such that the PUCCH resource for communicating PUCCH on the carrier after switching can be determined without requiring additional signaling notification or indication, and the normal implementation of the communication with PUCCH carrier switching can be ensured without increasing additional signaling overhead.

It should be noted here that the above-mentioned apparatus provided by the embodiments of the present disclosure can implement all the method steps implemented by the above-mentioned method embodiment, and can achieve the same technical effect. The description and advantageous effects for this embodiment that are the same as those in the method embodiment will not be described in detail here.

As shown in FIG. 10, an embodiment of the present disclosure further provides a communication processing apparatus for carrier switching, the communication processing apparatus for carrier switching is a network-side device or a terminal, which includes a determining module 100.

The determining module 100 is configured to: in a case that a carrier switching is to be performed on a physical uplink control channel (PUCCH) communicated on a first carrier, determine a first PUCCH resource on a second carrier after PUCCH carrier switching in a predetermined manner, where the second carrier is a carrier for communicating PUCCH after switching.

Optionally, the determining module includes a first determining submodule.

The first determining submodule is configured to determine, according to a starting symbol and a symbol length of the second PUCCH resource, a PUCCH resource in time units for communicating PUCCH on the second carrier as the first PUCCH resource, where the second PUCCH resource is a PUCCH resource on the first carrier which corresponds to the PUCCH for which the carrier switching is performed.

Optionally, a frequency domain resource of the first PUCCH resource is the same as a frequency domain resource of the second PUCCH resource, and/or, a code domain resource of the first PUCCH resource is the same as a code domain resource of the second PUCCH resource.

Optionally, a unit of a time unit for communicating PUCCH on the first carrier is the same as that of a time unit for communicating PUCCH on the second carrier; or, the time unit for communicating the PUCCH on the first carrier is less than or equal to the time unit for communicating the PUCCH on the second carrier.

Optionally, the determining module includes a second determining submodule.

The second determining submodule is configured to: in a case that the PUCCH for which the carrier switching is to be performed has at least a corresponding PDCCH, determine, according to a PUCCH resource indication field in a last PDCCH corresponding to the PUCCH for which the carrier switching is to be performed, a PUCCH resource in a pre-configured PUCCH resource set on the second carrier as the first PUCCH resource, where the pre-configured PUCCH resource set includes one or more PUCCH resource sets.

Optionally, the determining module includes a third determining submodule.

The third determining submodule is configured to: in a case that the PUCCH for which the carrier switching is to be performed has no corresponding PDCCH, determine a PUCCH resource in pre-configured PUCCH resources on the second carrier corresponding to semi-persistent UCI as the first PUCCH resource.

Optionally, the determining module includes a fourth determining submodule.

The fourth determining submodule is configured to determine a third PUCCH resource on the second carrier as the first PUCCH resource, where the third PUCCH resource is a pre-configured PUCCH resource on the second carrier, the third PUCCH resource is a first-type PUCCH resource, and the first-type PUCCH resource includes at least one of the following:

a PUCCH resource corresponding to a first type of preset PUCCH format;
a PUCCH resource with a payload capacity greater than a preset threshold.

Optionally, the apparatus further includes a first processing module.

The first processing module is configured to: in a case that a quantity of bits of UCI to be communicated on the first PUCCH resource is less than a predetermined threshold, supplement the UCI with information until the predetermined threshold is reached.

Optionally, the determining module includes a fifth determining submodule.

The fifth determining submodule is configured to determine, according to the quantity of bits of UCI to be communicated on the first PUCCH resource, a PUCCH resource in one or more PUCCH resource sets pre-configured on the second carrier as the first PUCCH resource,
where the one or more PUCCH resource sets include at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with a payload capacity not exceeding the preset threshold or a resource corresponding to a second type of preset PUCCH format.

Optionally, the fifth determining submodule is further configured to:

in a case that the one or more PUCCH resource sets include only one first-type PUCCH resource and one second-type PUCCH resource, determine a PUCCH resource corresponding to the quantity of bits of UCI carried on the PUCCH for which the carrier switching is to be performed as the first PUCCH resource; or,
in a case that the one or more PUCCH resource sets include a plurality of first-type PUCCH resources and/or a plurality of second-type PUCCH resources, determine one type of PUCCH resources from the first-type PUCCH resources and the second-type PUCCH resources according to the quantity of bits of UCI to be communicated on the first PUCCH resource; and in a case that the determined one type of PUCCH resources includes a plurality of PUCCH resources, determine a fourth PUCCH resource in the determined one type of PUCCH resources as the first PUCCH resource,
where a starting position of the fourth PUCCH resource is not earlier than a starting position of a second PUCCH resource; or, the fourth PUCCH resource meets a processing time requirement of UCI communication, and the second PUCCH resource is a PUCCH resource on the first carrier which corresponds to the PUCCH for which the carrier switching is performed.

Optionally, the fifth determining submodule is further configured to: in a case that the fourth PUCCH resource includes a plurality of PUCCH resources, select a PUCCH resource from the plurality of PUCCH resources as the first PUCCH resource based on at least one of:

a starting position;
a quantity of occupied symbols;
a payload capacity; or,
a resource number.

Optionally, the apparatus further includes a second processing module.

The second processing module is configured to: in a case that the determined first PUCCH resource is the first-type PUCCH resource, determine a quantity of resource blocks (RBs) actually occupied by the first PUCCH resource according to the quantity of bits of UCI carried by the first PUCCH resource.

With the apparatus in the embodiments in the present disclosure, when the PUCCH carrier switching is to be performed, the PUCCH resource on the carrier after switching is determined in the predetermined manner, such that the PUCCH resource for communicating PUCCH on the carrier after switching can be determined without requiring additional signaling notification or indication, and the normal implementation of the communication with PUCCH carrier switching can be ensured without increasing additional signaling overhead.

It should be noted that the division of units, modules or submodules in the embodiments of the present application is illustrative, which is only a logical function division, and there may be another division manner in actual implementation. In addition, various functional units in various embodiments of the present application may be integrated into one processing unit, each unit may exist separately in physical, or two or more units may be integrated into one unit. The above-mentioned integrated units may be implemented in the form of hardware or software functional unit.

If the integrated units are realized in the form of software functional unit and sold or used as an independent product, the integrated units may be stored in a processor-readable storage medium. Based on this understanding, the essence of the technical solution of this application or the part that contributes to the related technology or all or part of the technical solution may be embodied in the form of a software product, and the computer software product is stored in a storage medium. Several instructions are included to cause a computer device (which may be a personal computer, a server, or a network device, etc.) or a processor (processor) to execute all or part of the steps of the methods described in the various embodiments of the present application. The aforementioned storage medium includes: U disk, mobile hard disk, read-only memory (Read-Only Memory, ROM), random access memory (Random Access Memory, RAM), magnetic disk or optical disk and other medium that may store program codes.

It should be noted here that the above-mentioned apparatus provided by the embodiments of the present disclosure can implement all the method steps implemented in the above-mentioned method embodiments, and can achieve the same technical effect. The parts and advantageous effects in this embodiment that are the same as those in the method embodiment will not be described in detail here.

In some embodiments of the present disclosure, a processor-readable storage medium is further provided, the processor-readable storage medium stores program instructions, and the program instructions are used to cause the processor to perform the above-mentioned communication processing method for carrier switching.

When the program instructions are executed by the processor, all the above-mentioned implementations applied to the method embodiment shown in FIG. 1 can be realized. To avoid repetition, details are not repeated here.

The technical solutions provided by the embodiments of the present application may be applied to a variety of systems, especially 5G systems. For example, the applicable system may be global system of mobile communication (Global System of Mobile communication, GSM) system, code division multiple access (Code Division Multiple Access, CDMA) system, wideband code division multiple access (Wideband Code Division Multiple Access, WCDMA) general packet radio service (General Packet Radio Service, GPRS) system, long term evolution (Long Term Evolution, LTE) system, LTE frequency division duplex (Frequency Division Duplex, FDD) system, LTE time division duplex (Time Division Duplex, TDD) system, long term evolution advanced (Long Term Evolution Advanced, LTE-A) system, universal mobile telecommunication system (Universal Mobile Telecommunication System, UMTS), worldwide interoperability for microwave access (Worldwide Interoperability for Microwave Access, WiMAX) system, 5G new radio (New Radio, NR) system, etc. These various systems include terminal device and network device. The system may further include the core network part, such as the evolved packet system (Evolved Packet System, EPS), 5G system (5GS), etc.

The terminal device involved in this embodiment of the present application may be a device that provides voice and/or data connectivity to a user, a handheld device with a wireless connection function, or other processing devices connected to a wireless modem. In different systems, the name of the terminal device may be different. For example, in a 5G system, the terminal device may be called user equipment (User Equipment, UE). Wireless terminal device may communicate with one or more core networks (Core Network, CN) via a radio access network (Radio Access Network, RAN), the wireless terminal device may be a mobile terminal device, such as a mobile phone (or called a "cellular "telephones) and computers with mobile terminal device, such as portable, pocket, hand-held, computer built-in or vehicle-mounted mobile apparatuses, which exchange language and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. Wireless terminal device may also be called system, subscriber unit (subscriber unit), subscriber station (subscriber station), mobile station (mobile station), mobile (mobile), remote station (remote station), access point (access point), a remote terminal device (remote terminal), an access terminal device (access terminal), a user terminal device (user terminal), a user agent (user agent), and a user device (user device), which are not limited in the embodiment of the present application.

The network-side device involved in the embodiments of the present application may be a base station, and the base station may include multiple cells that provide services for terminals. Depending on the specific application scenario, the base station may also be called an access point, or may be a device in the access network that communicates with the wireless terminal device through one or more sectors on the air interface, or other names. Network devices may be used to interchange received over-the-air frames with internet protocol (Internet Protocol, IP) packets and act as routers between wireless terminal devices and the rest of the access network, the rest of the access network may include the internet protocol (Internet Protocol, IP) communications network. The network-side device may also coordinate the attribute management of the air interface. For example, the network-side device involved in the embodiments of the present application may be a network-side device (Base Transceiver Station, BTS) in global system for mobile communications (Global System for Mobile communications, GSM) or code division multiple access (Code Division Multiple Access, CDMA), or the network-side device (NodeB) in wide-band code division multiple access (Wide-band Code Division Multiple Access, WCDMA), or the evolutional network-side device (evolutional Node B, eNB or e-NodeB) in the long term evolution (Long Term Evolution, LTE) system, the 5G base station (gNB) in the 5G network architecture (next generation system), or home evolved Node B (Home evolved Node B, HeNB), relay node (relay node), home base station (femto), pico base station (pico), etc. which are not limited in the embodiments of the present application. In some network structures, the network-side device may include a centralized unit (Centralized Unit, CU) node and a distributed unit (Distributed Unit, DU) node, and the centralized unit and the distributed unit may also be arranged geographically separately.

One or more antennas may be used between the network-side device and the terminal device for multi input multi output (Multi Input Multi Output, MIMO) transmission, MIMO transmission may be single user MIMO (Single User MIMO, SU-MIMO) or multiple user MIMO (Multiple User MIMO, MU-MIMO). According to the shape and quantity of root antenna combinations, MIMO transmission may be 2D-MIMO, 3D-MIMO, FD-MIMO, or massive-MIMO, or diversity transmission, precoding transmission, or beamforming transmission, etc.

Those skilled in the art will understand that embodiments of the present application may be embodied as a method, a system, or a computer program product. Accordingly, the present application may be implemented in a form of an entirely hardware embodiment, an entirely software embodiment, or an embodiment that combines software and hardware aspects. Furthermore, the present application may be implemented in a form of a computer program product embodied on one or more computer-usable storage media (including but not limited to magnetic disk storage and optical storage, etc.) having computer-usable program codes embodied therein.

The present application is described with reference to flowcharts and/or block diagrams of methods, apparatus (systems), and computer program products according to embodiments of the present application. It should be understood that each procedure and/or block in the flowchart and/or block diagrams, and combinations of procedures and/or blocks in the flowchart and/or block diagrams can be implemented by computer-executable instructions. These computer-executable instructions can be provided to a general-purpose computer, special purpose computer, embedded processor, or processor of other programmable data processing device to produce a machine, such that instructions executed by the processor of the computer or other programmable data processing device produce an apparatus for implementing the functions specified in one or more procedures of the flowchart and/or one or more blocks of the block diagram.

These processor-executable instructions may also be stored in a processor-readable memory capable of directing a computer or other programmable data processing device to operate in a specific manner, such that the instructions stored in the processor-readable memory produce a manufacturing product including instruction apparatus, the instruction apparatus implements the function specified in one or more procedures of the flowchart and/or one or more blocks of the block diagram.

These processor-executable instructions can also be loaded onto a computer or other programmable data processing device, such that a series of operational steps performed on the computer or other programmable device produce a computer-implemented processing, thus the instructions executed on the computer or other programmable devices provide steps for implementing the functions specified in one or more procedures of the flowchart and/or one or more blocks of the block diagram.

Obviously, those skilled in the art can make various modifications and variations to the present application without departing from the spirit and scope of the present application. In this way, if these modifications and variations of the present application fall within the scope of the claims of the present application and their equivalent technologies, the present application is also intended to include these modifications and variations.

## Claims

**1.** A communication processing method for carrier switching, applied to a network-side device or a terminal, comprising:

in a case that a carrier switching is to be performed on a physical uplink control channel PUCCH communicated on a first carrier, determining a first PUCCH resource on a second carrier after PUCCH carrier switching in a predetermined manner, and
wherein the second carrier is a carrier for communicating PUCCH after switching.

**2.** The method according to claim 1, wherein the determining the first PUCCH resource on the second carrier after the PUCCH carrier switching in the predetermined manner comprises:

determining, according to a starting symbol and a symbol length of a second PUCCH resource, a PUCCH resource in a time unit for communicating the PUCCH on the second carrier as the first PUCCH resource, and wherein the second PUCCH resource is a PUCCH resource on the first carrier which corresponds to the PUCCH for which the carrier switching is performed.

**3.** The method according to claim 2, wherein a frequency domain resource of the first PUCCH resource and a frequency domain resource of the second PUCCH resource are determined according to a same resource block RB index and a same quantity of RBs, and/or, a code domain resource of the first PUCCH resource and a code domain resource of the second PUCCH resource are determined according to a same index.

**4.** The method according to claim 2, wherein a unit of a time unit for communicating PUCCH on the first carrier is the same as a unit of a time unit for communicating PUCCH on the second carrier; or, the time unit for communicating PUCCH on the first carrier is less than or equal to the time unit for communicating PUCCH on the second carrier.

**5.** The method according to claim 1, wherein the determining the first PUCCH resource on the second carrier after the PUCCH carrier switching in the predetermined manner comprises:

in a case that the PUCCH for which the carrier switching is to be performed has at least a corresponding physical downlink control channel PDCCH, determining, by the terminal according to a PUCCH resource indication field in a last PDCCH corresponding to the PUCCH for which the carrier switching is to be performed, a PUCCH resource from a pre-configured PUCCH resource set on the second carrier as the first PUCCH resource, wherein the pre-configured PUCCH resource set comprises one or more PUCCH resource sets;
or,
in a case that the PUCCH for which the carrier switching is to be performed has at least a corresponding PDCCH, determining, by the network-side device, a PUCCH resource from a pre-configured PUCCH resource set on the second carrier, determining, by the network-side device, a PUCCH resource indication field in the PDCCH for indicating the determined PUCCH resource, and sending, by the network-side device, the PDCCH to the terminal, wherein the pre-configured PUCCH resource set comprises one or more PUCCH resource sets.

**6.** The method according to claim 1, wherein the determining the first PUCCH resource on the second carrier after the PUCCH carrier switching in the predetermined manner comprises:
in a case that the PUCCH for which the carrier switching is to be performed has no corresponding PDCCH, determining a PUCCH resource from pre-configured PUCCH resources on the second carrier which correspond to semi-persistent uplink control information UCI as the first PUCCH resource.

**7.** The method according to claim 1, wherein the determining the first PUCCH resource on the second carrier after the PUCCH carrier switching in the predetermined manner comprises:

determining a third PUCCH resource on the second carrier as the first PUCCH resource, and
wherein the third PUCCH resource is a pre-configured PUCCH resource on the second carrier, the third PUCCH resource is a first-type PUCCH resource, and the first-type PUCCH resource comprises at least one of:

a PUCCH resource corresponding to a first type of preset PUCCH format; and
a PUCCH resource with a payload capacity greater than a preset threshold.

**8.** The method according to claim 7, further comprising:

in a case that a quantity of bits of UCI to be communicated on the first PUCCH resource is less than a predetermined threshold, supplementing the UCI with information until the predetermined threshold is reached.

**9.** The method according to claim 1, wherein the determining the first PUCCH resource on the second carrier after the PUCCH carrier switching in the predetermined manner comprises:

determining, according to a quantity of bits of UCI to be communicated on the first PUCCH resource, a PUCCH resource from one or more PUCCH resource sets pre-configured on the second carrier as the first PUCCH resource, and

wherein the one or more PUCCH resource sets comprise at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with a payload capacity not exceeding the preset threshold or a resource corresponding to a second type of preset PUCCH format.

**10.** The method according to claim 9, wherein the determining the PUCCH resource from the one or more PUCCH resource sets pre-configured on the second carrier as the first PUCCH resource comprises:

in a case that the one or more PUCCH resource sets comprise only one first-type PUCCH resource and only one second-type PUCCH resource, determining a PUCCH resource corresponding to a quantity of bits of UCI carried on the PUCCH for which the carrier switching is to be performed as the first PUCCH resource; or,

in a case that the one or more PUCCH resource sets comprise a plurality of first-type PUCCH resources and/or a plurality of second-type PUCCH resources, determining, according to the quantity of bits of UCI to be communicated on the first PUCCH resource, one type of PUCCH resources from the first-type PUCCH resources and the second-type PUCCH resources; and in a case that the determined one type of PUCCH resources comprises a plurality of PUCCH resources, determining a fourth PUCCH resource from the determined one type of PUCCH resources as the first PUCCH resource, and

wherein a starting position of the fourth PUCCH resource is not earlier than a starting position of a second PUCCH resource; or, the fourth PUCCH resource meets a processing time requirement for UCI communication, wherein the second PUCCH resource is a PUCCH resource on the first carrier which corresponds to the PUCCH for which the carrier switching is performed.

**11.** The method according to claim 10, wherein the determining the fourth PUCCH resource as the first PUCCH resource comprises:
in a case that the fourth PUCCH resource comprises a plurality of PUCCH resources, selecting a PUCCH resource from the plurality of PUCCH resources as the first PUCCH resource based on at least one of:

a starting position;
a quantity of occupied symbols;
a payload capacity; and
a resource number.

**12.** The method according to claim 7 or 9, further comprising:
in a case that the determined first PUCCH resource is the first-type PUCCH resource, determining, according to a quantity of bits of UCI carried by the first PUCCH resource, a quantity of resource blocks RBs actually occupied by the first PUCCH resource.

**13.** A communication processing apparatus for carrier switching, the communication processing apparatus for carrier switching being a network-side device or a terminal, comprising: a memory, a transceiver, and a processor;
wherein the memory is configured to store program instructions; the transceiver is configured to send and receive data under the control of the processor; and the processor is configured to read the program instructions in the memory to perform following operation:

in a case that a carrier switching is to be performed on a physical uplink control channel PUCCH communicated on a first carrier, determining a first PUCCH resource on a second carrier after PUCCH carrier switching in a predetermined manner, and

wherein the second carrier is a carrier for communicating PUCCH after switching.

**14.** The apparatus according to claim 13, wherein the processor is configured to read program instructions in the memory and perform following operation:

determining, according to a starting symbol and a symbol length of a second PUCCH resource, a PUCCH resource in a time unit for communicating the PUCCH on the second carrier as the first PUCCH resource, and wherein the second PUCCH resource is a PUCCH resource on the first carrier which corresponds to the PUCCH for which the carrier switching is performed.

**15.** The apparatus according to claim 14, wherein a frequency domain resource of the first PUCCH resource and a frequency domain resource of the second PUCCH resource are determined according to a same resource block RB index and a same quantity of RBs, and/or, a code domain resource of the first PUCCH resource and a code domain resource of the second PUCCH resource are determined according to a same index.

**16.** The apparatus according to claim 14, wherein a unit of a time unit for communicating PUCCH on the first carrier is the same as a unit of a time unit for communicating PUCCH on the second carrier; or, the time unit for communicating PUCCH on the first carrier is less than or equal to the time unit for communicating PUCCH on the second carrier.

**17.** The apparatus according to claim 13, wherein the processor is configured to read the program instructions in the memory to perform following operation:

in a case that the PUCCH for which the carrier switching is to be performed has at least a corresponding physical downlink control channel PDCCH, determining, according to a PUCCH resource indication field in a last PDCCH corresponding to the PUCCH for which the carrier switching is to be performed, a PUCCH resource from a pre-configured PUCCH resource set on the second carrier as the first PUCCH resource;
or,
in a case that the PUCCH for which the carrier switching is to be performed has at least a corresponding PDCCH, determining a PUCCH resource from a pre-configured PUCCH resource set on the second carrier, determining a PUCCH resource indication field in the PDCCH for indicating the determined PUCCH resource, and sending the PDCCH to the terminal; and
wherein the pre-configured PUCCH resource set comprises one or more PUCCH resource sets.

**18.** The apparatus according to claim 13, wherein the processor is configured to read the program instructions in the memory to perform following operation:
in a case that the PUCCH on which the carrier switching is to be performed has no corresponding PDCCH, determining, a PUCCH resource from pre-configured PUCCH resources on the second carrier which correspond to semi-persistent uplink control information UCI as the first PUCCH resource.

**19.** The apparatus according to claim 13, wherein the processor is configured to read the program instructions in the memory to perform following operation:

determining a third PUCCH resource on the second carrier as the first PUCCH resource, and
wherein the third PUCCH resource is a pre-configured PUCCH resource on the second carrier, the third PUCCH resource is a first-type PUCCH resource, and the first-type PUCCH resource comprises at least one of:

a PUCCH resource corresponding to a first type of preset PUCCH format; and
a PUCCH resource with a payload capacity greater than a preset threshold.

**20.** The apparatus according to claim 19, wherein the processor is configured to read the program instructions in the memory to perform following operation:
in a case that a quantity of bits of UCI to be communicated on the first PUCCH resource is less than a predetermined threshold, supplementing the UCI with information until the predetermined threshold is reached.

**21.** The apparatus according to claim 13, wherein the processor is configured to read the program instructions in the memory to perform following operation:

determining, according to a quantity of bits of UCI to be communicated on the first PUCCH resource, a PUCCH resource from one or more PUCCH resource sets pre-configured on the second carrier as the first PUCCH resource, and

wherein the one or more PUCCH resource sets comprise at least one first-type PUCCH resource and at least one second-type PUCCH resource, and the first-type PUCCH resource is a PUCCH resource with a payload capacity greater than a preset threshold or a resource corresponding to a first type of preset PUCCH format, and the second-type PUCCH resource is a PUCCH resource with a payload capacity not exceeding the preset threshold or a resource corresponding to a second type of preset PUCCH format.

**22.** The apparatus according to claim 21, wherein the processor is configured to read the program instructions in the memory to perform following operation:

in a case that the one or more PUCCH resource sets comprise only one first-type PUCCH resource and only one second-type PUCCH resource, determining a PUCCH resource corresponding to a quantity of bits of UCI carried on the PUCCH for which the carrier switching is to be performed as the first PUCCH resource; or,
in a case that the one or more PUCCH resource sets comprise a plurality of first-type PUCCH resources and/or a plurality of second-type PUCCH resources, determining, according to the quantity of bits of UCI to be communicated on the first PUCCH resource, one type of PUCCH resources from the first-type PUCCH resources and the second-type PUCCH resources; and in a case that the determined one type of PUCCH resources comprises a plurality of PUCCH resources, determining a fourth PUCCH resource from the determined one type of PUCCH resources as the first PUCCH resource, and
wherein a starting position of the fourth PUCCH resource is not earlier than a starting position of a second PUCCH resource; or, the fourth PUCCH resource meets a processing time requirement for UCI communication, wherein the second PUCCH resource is a PUCCH resource on the first carrier which corresponds to the PUCCH for which the carrier switching is performed.

**23.** The apparatus according to claim 22, wherein the processor is configured to read the program instructions in the memory to perform following operation:
in a case that the fourth PUCCH resource comprises a plurality of PUCCH resources, selecting a PUCCH resource from the plurality of PUCCH resources as the first PUCCH resource based on at least one of:

a starting position;
a quantity of occupied symbols;
a payload capacity; and
a resource number.

**24.** The apparatus according to claim 19 or 21, wherein the processor is configured to read the program instructions in the memory to perform following operation:
in a case that the determined first PUCCH resource is the first-type PUCCH resource, determining, according to a quantity of bits of UCI carried by the first PUCCH resource, a quantity of resource blocks RBs actually occupied by the first PUCCH resource.

**25.** A communication processing apparatus for carrier switching, the communication processing apparatus for carrier switching being a network-side device or a terminal, comprising:

a determining module, configured to: in a case that a carrier switching is to be performed on a physical uplink control channel PUCCH communicated on a first carrier, determine a first PUCCH resource on a second carrier after PUCCH carrier switching in a predetermined manner, and
wherein the second carrier is a carrier for communicating PUCCH after switching.

**26.** A processor-readable storage medium, wherein the processor-readable storage medium stores a computer program, and the computer program is configured to cause the processor to execute the communication processing method for carrier switching according to any one of claims 1 to 12.

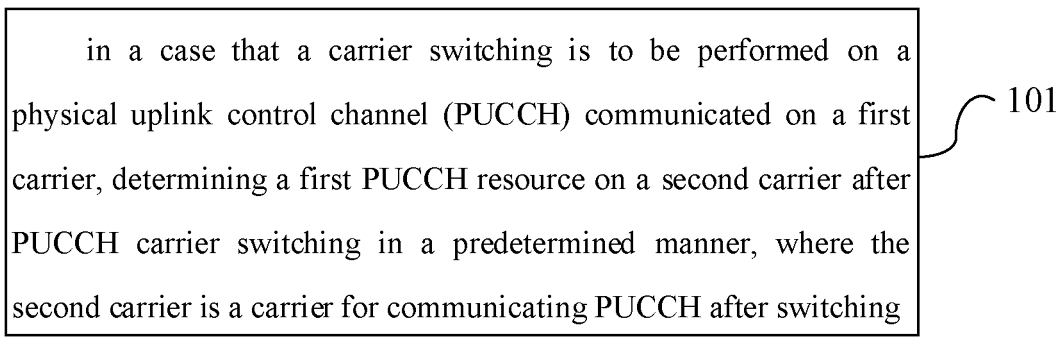
in a case that a carrier switching is to be performed on a physical uplink control channel (PUCCH) communicated on a first carrier, determining a first PUCCH resource on a second carrier after PUCCH carrier switching in a predetermined manner, where the second carrier is a carrier for communicating PUCCH after switching
101

FIG.1

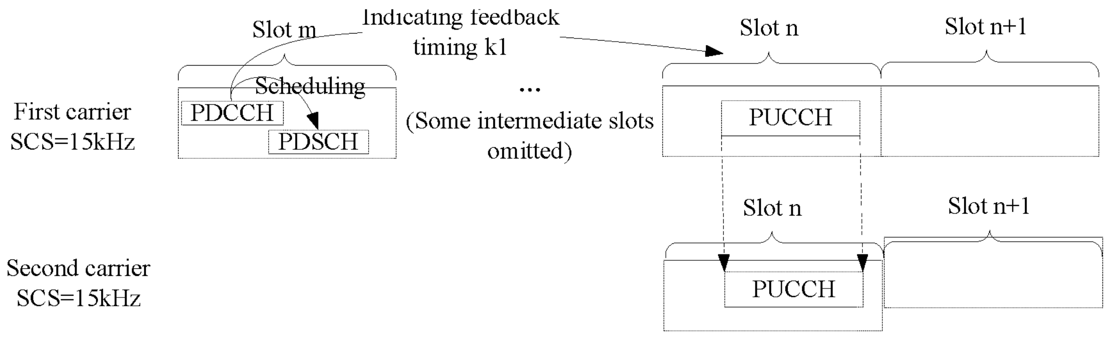


FIG.2

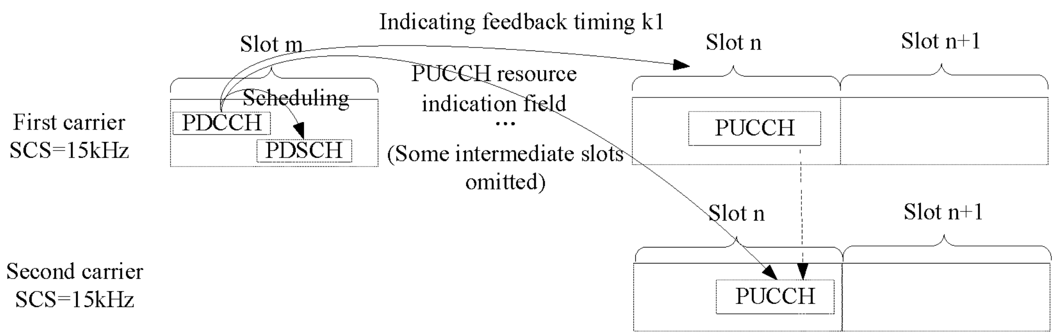


FIG.3

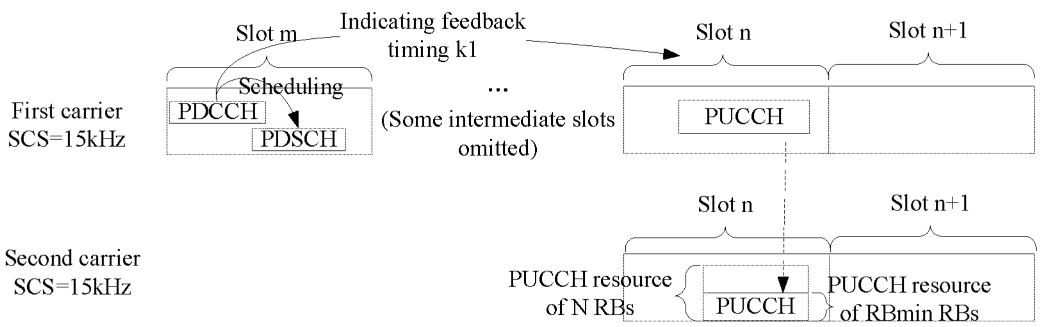


FIG.4

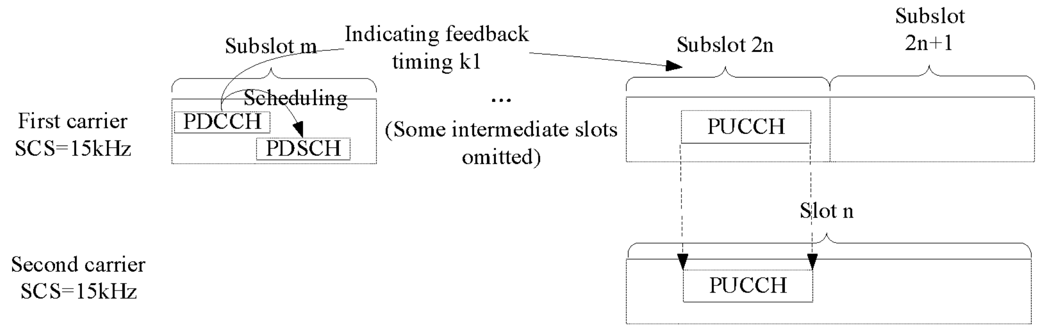


FIG.5

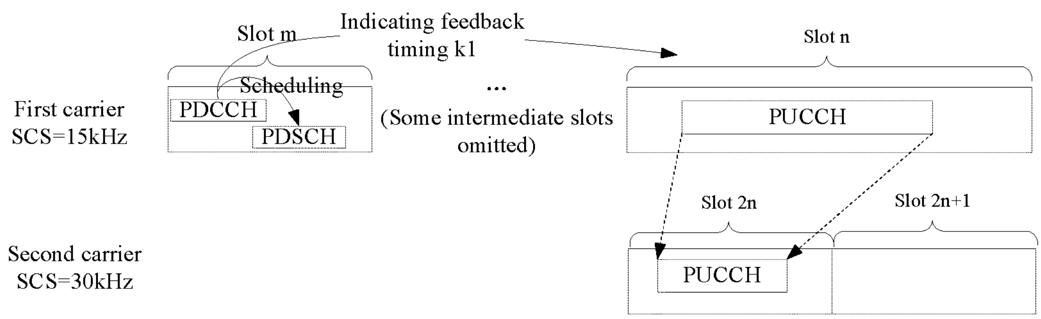


FIG.6

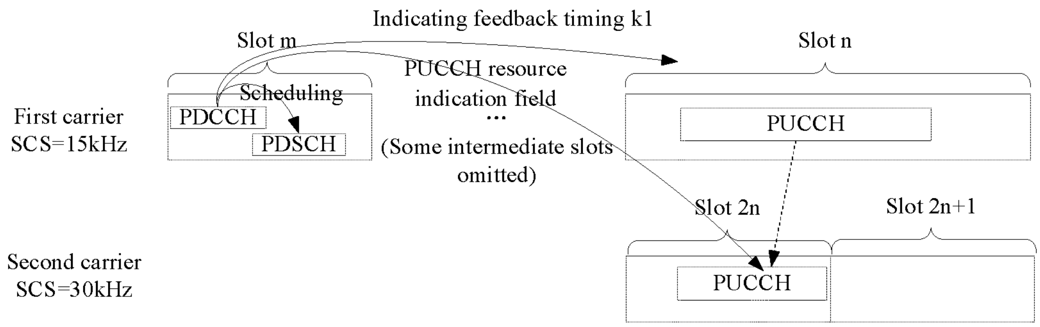


FIG.7

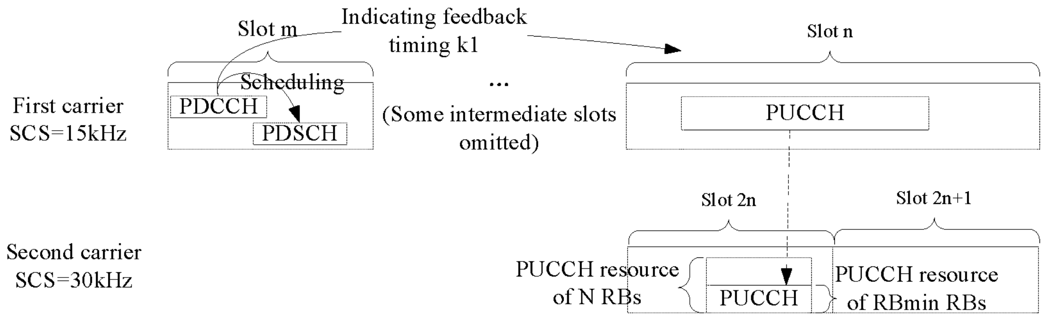


FIG.8

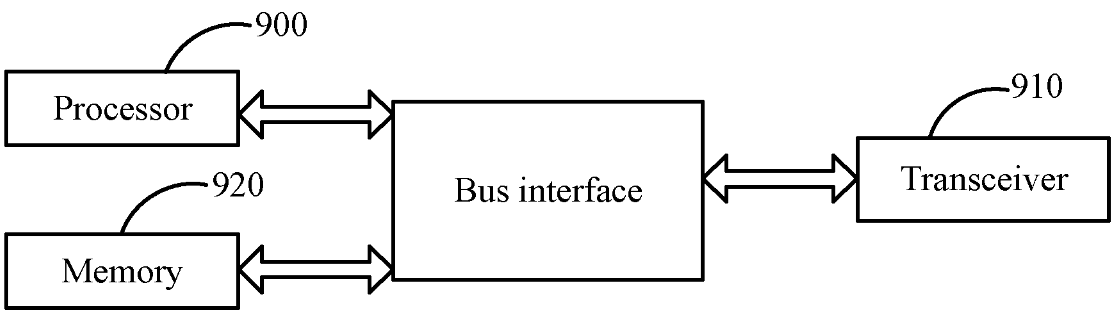


FIG.9

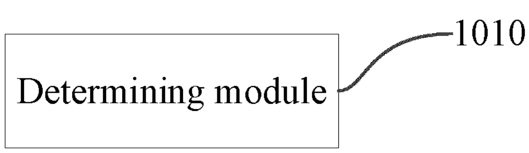


FIG.10

## INTERNATIONAL SEARCH REPORT

International application No.
**PCT/CN2022/085804**

**A. CLASSIFICATION OF SUBJECT MATTER**

H04L 5/00(2006.01)i；H04W 72/04(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 跨载波, 频率, 频谱, 反馈, 上行控制信息, 延迟, 时延, 延时, 物理上行控制信道, across carrier, frequency, band, feedback, UCI, ACK, delay, PUCCH

**C. DOCUMENTS CONSIDERED TO BE RELEVANT**

| Category* | Citation of document, with indication, where appropriate, of the relevant passages | Relevant to claim No. |
|---|---|---|
| PX | CN 113747586 A (COMBA NETWORK SYSTEMS COMPANY LIMITED) 03 December 2021 (2021-12-03)<br>description, paragraphs [0087]-[0353] | 1-26 |
| X | WO 2016161550 A1 (NEC CORP. et al.) 13 October 2016 (2016-10-13)<br>description, paragraphs [0025]-[0152] | 1-26 |
| X | CN 108631952 A (HUAWEI TECHNOLOGIES CO., LTD.) 09 October 2018 (2018-10-09)<br>description, paragraphs [0056]-[0120] | 1-26 |
| X | CN 109586876 A (HUAWEI TECHNOLOGIES CO., LTD.) 05 April 2019 (2019-04-05)<br>description, paragraphs [0113]-[0267] | 1-26 |
| A | CN 105790897 A (BEIJING SAMSUNG TELECOM RESEARCH & DEVELOPMENT CENTER et al.) 20 July 2016 (2016-07-20)<br>entire document | 1-26 |

☐ Further documents are listed in the continuation of Box C.　☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 May 2022** | **23 June 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/085804**

| Patent document cited in search report | | | Publication date (day/month/year) | Patent family member(s) | | | Publication date (day/month/year) |
|---|---|---|---|---|---|---|---|
| CN | 113747586 | A | 03 December 2021 | None | | | |
| WO | 2016161550 | A1 | 13 October 2016 | None | | | |
| CN | 108631952 | A | 09 October 2018 | WO | 2018171530 | A1 | 27 September 2018 |
| CN | 109586876 | A | 05 April 2019 | EP | 3678320 | A1 | 08 July 2020 |
| | | | | WO | 2019062583 | A1 | 04 April 2019 |
| | | | | US | 2020267720 | A1 | 20 August 2020 |
| CN | 105790897 | A | 20 July 2016 | KR | 20160079647 | A | 06 July 2016 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110413232X